# EUROPEAN PATENT SPECIFICATION

(11) **EP 1 745 332 B1**
(45) Date of publication and mention of the grant of the patent: **05.10.2011**
(21) Application number: 05764841.2
(22) Date of filing: 13.05.2005
(51) Int. Cl.: G03C 9/08

(54) **COLOR TONER HAVING LOW CONTAMINATION OF CHARGING ELEMENTS**
FARBTONER MIT GERINGER VERUNREINIGUNG VON LADEELEMENTEN
POUDRE DE TONER DE COULEUR AVEC FAIBLE CONTAMINATION DES ELEMENTS DE CHARGE

(30) Priority: 13.05.2004 KR 2004033784
(43) Date of publication of application: 24.01.2007
(73) Proprietor: LG Chem, Ltd., 150-010 Seoul (KR)
(72) Inventor: LEE, Hyeung-Jin, Busan-city 608-080 (KR); PARK, Joo-Yong, Daejeon-city 302-782 (KR); LEE, Chang-Soon, 109-1603 Cheonggunarae apt., Daejeon-city 305-729 (KR)
(74) Representative: HOFFMANN EITLE
(86) International application number: PCT/KR2005/001409
(87) International publication number: WO 2005/111721

(56) References cited:
- JP-A- 2004 102 028
- US-A- 4 837 101
- US-A- 4 948 686
- US-A- 5 275 905

## Description

### BACKGROUND OF THE INVENTION

### Field of the Invention

The present invention relates to a non-magnetic mono-component color toner, and more specifically to a non-magnetic mono-component color toner having a narrow charge distribution, good chargeability, good environmental independence, superior image characteristics, high transfer efficiency, and excellent long-term stability and image quality.

### Description of the Related Art

The recent hard-copying and printing techniques using image formation methods such as electrophotographs, are rapidly moving toward full color from black and white. In particular, the color printer market is expanding very rapidly. In general, formation of color images by full color electrophotography is carried out with three colors comprising cyan, magenta, and yellow, or four colors further comprising black, to reproduce all colors. In this rapidly growing full color market, high image quality, good reliability, compactness, light-weight, low price, high speed, and furthermore environmental aspects such as low energy consumption, recyclability and so forth are strongly required. Improvement and development of image formation methods and toners to satisfy these requirements are widely in progress.

In general, image formation in electrophotography includes the steps of uniformly charging a drum surface, exposing the drum surface and forming an electrostatic latent image, developing the latent image on the drum surface using a toner formed on the surface of a developing roller and obtaining a toner image, transferring the toner image, fixing the toner image, and a cleaning step that removes the toner remaining on the drum surface from the transfer step.

Each step of the image formation process in electrophotography requires the following basic characteristics from a toner. The developing step requires an appropriate charging of the toner, charge maintenance, and environmental independence. The transfer step requires good transfer characteristics. The settlement step requires the characteristics of low-temperature fixing and offset resistance. And lastly, the cleaning step requires good cleaning performance and contamination resistance. Recently, the above characteristics have become more important with the trend toward high resolution, high speed, and full color.

With regard to long-term maintenance of image quality for repeated printing, there is a method of mixing four colors directly in a photoconductive drum in the transfer step. And recently, indirect transfer image formation has been mainly used in full color printers because it can offer high speed and good image quality. In indirect transfer image formation, a toner image of each color on the drum surface is repeatedly transferred to an intermediate transfer belt, and then the image as a whole is transferred onto paper.

However, because indirect transfer image formation requires more toner transfer steps, charging elements can be more easily contaminated, thereby making it difficult to obtaining accurate transfer performance.

In order to obtain stable long-term and high-quality full color images, research on additives, toner shape, surface structure control, and so forth are required to obtain higher charging stability and to minimize the contamination in charging elements.

With regard to the cleaning step, reduction of remaining toner after transfer and reducing the cleaner size are important tasks for improving environmental independence.

To overcome these problems of the transfer and cleaning steps, it is important to maintain uniform electrification. One of the characteristics required for this purpose is to prevent the deterioration of electrification which is caused by contamination in charging elements. For this purpose, it is best not to use material which contaminates the charging elements, but when such material is essential, an additive can be used that makes cleaning easier by decreasing the adhesive force of the charging elements. Although the former situation is ideal, in actual toner manufacturing processes, it is not always possible to use materials with desired characteristics, so the latter is mostly the case. In addition, it is important to reduce the remaining toner amount, and thus to improve and maintain transfer efficiency of the toner.

Fine particles such as silica may be added to the toner to reduce its adhesiveness to the photoconductive drum. However, in case of using fine silica particles, it is intervened between toner and drum to reduce the toner's adhesiveness to the drum and improve its transfer efficiency, so in order to obtain good transfer efficiency, the level of cover of the toner surface by the particles has to be high. Consequently, the amount of added fine particles increases and the toner charging characteristics become poor. Moreover, the fine particles may adhere to electrostatic latent image carriers, and filming or fixing problems may occur. In particular, silica particles may cause problems of image density irregularity at low temperature and humidity, and non-image area contamination at high temperature and humidity, because they are highly environment-dependent.

Korean Patent Publication No. 1996-0024716 discloses a toner for electrophotography comprising a fine powder fatty acid metal salt the surface of which is treated with hydrophobic silica, or fine powder of a melted mixture of fatty acid metal salt the surface of which is treated with hydrophobic silica, and resin. In addition, Korean Patent Publication No. 2003-0056152 discloses the mono-component magnetic toner composition comprising a mother particle of magnetic toner, hydrophobic silica having specific surface area of 20-80 m²/g, hydrophobic silica having specific surface area of 130-230 m²/g, and metal oxide fine powder. However, the documents do not disclose the spherical organic fine powder which is an essential component of the present invention.

As a method for improving environmental independence of a toner, addition of inorganic fine particles having electric resistance lower than that of silica particles and good electrification, such as titanium oxide particles, is known. However, if inorganic fine particles having lower electric resistance are used, charge distribution of the toner may change easily. Also, it may result in poor second transfer when using an intermediate transfer belt or retransfer of wrong sign color toner during multiple transfers.

A method of increasing resistance of inorganic fine particles by treating the surface with a silane coupling agent, etc. was proposed to solve this problem. However, cohesion of the fine particles becomes so severe that their dispersibility on the toner surface decreases. Also, fluidity of the toner may decrease or blocking may occur due to free cohered particles.

JP 2004 102028 relates to a non-magnetic toner comprising inorganic particulates and two or more kinds of organic particulates which are externally added onto the surfaces of mother toner particles consisting of at least a binder resin and a color pigment.

Accordingly, research on a color toner having a narrow charge distribution, good charging characteristics, environmental independence, and long-term stability without contamination of the charging elements, is in much demand.

### SUMMARY OF THE INVENTION

An object of the present invention is to provide a non-magnetic mono-component color toner composition having superior image characteristics, transfer efficiency, long-term stability, and long-term reliability by reducing the contamination of the charging elements, and a preparation method thereof.

The inventors of the present invention worked on a method of preparing color toner for use in electrophotography having narrow charge distribution, high chargeability, long-term stability, and long-term maintenance of good image quality by reducing contamination of the charging elements. In doing so, they realized that toner mother particle coated with fatty acid metal salt, two kinds of organic particles with different particle size, and silica have a narrow charge distribution, high chargeability, and image quality, transfer efficiency and long-term stability by reducing contamination of the charging elements, and long-term reliability due to a significant improvement in charge maintenance capability.

The present invention provides a non-magnetic mono-component color toner comprising a toner mother particle and a coating layer thereon, where the coating layer contains a fatty acid metal salt having an average particle size of 0.05 to 3.0 µm, a first organic particle having an average particle size of 0.3 to 2.0 µm, a second organic particle having an average particle size of 0.05 to 0.25 µm, and silica having an average particle size of 0.006 to 0.04µm, each in specified amounts.

The non-magnetic mono-component color toner particle is spherical and has an average particle size of 20 µm or less, and an aspect ratio of short radius against long radius of 0.3 to 0.8.

### BRIEF DESCRIPTION OF THE DRAWINGS

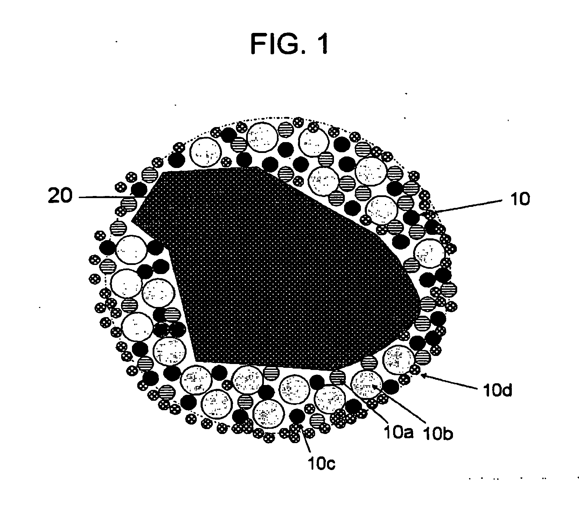

Fig. 1 is a sectional view showing the structure of the non-magnetic mono-component color toner of the present invention.

### DETAILED DESCRIPTION OF THE ILLUSTRATED EMBODIMENTS

The charging behavior of toner is affected by the composition of the coating layer formed on the surface of the toner particle. The toner particle of the present invention acts as a spherical toner, by including fatty acid metal salt, two kinds of organic particles with different particle size, and silica in the coating layer formed on the surface of toner mother particle. The toner particle of the present invention has reduced friction resistance between sleeve and charging blade during toner charging, and thus prevents toner melting on charging blade and formation of solid adhesion between toners. In addition, in the present invention, an improvement in the ability to clean remaining toner upon transfer to surface of organic photo drum, and released additives prevents contamination of the primary charge roller (PCR), so as to produce a stable image in the long run.

In particular, the use of the fatty acid metal salt in combination with two kinds of organic particles with different particle size on the surface of toner mother particle decreases the friction resistance of toner in contact with the surface of the charging blade, and maximizes the ability to clean the organic photo drum.

Fig. 1 is a sectional view showing the structure of the color toner according to the present invention. The color toner has a core-shell type structure containing a toner mother particle 20, and a coating layer 30 formed on surface of the toner mother particle.

As shown in Fig. 1, the toner mother particle 20 is typically an irregularly-shaped particle. Compared to the conventional dual-component developing method and magnetic developing method, the non-magnetic mono-component developing method of the present invention does not have any magnetic force that attracts toner particles onto the surface of the sleeve, and thus the toner surface must be strongly charged in order to prevent scatter of toner particles during the developing step. Excessive charging for this reason causes friction between charging blade and toner particle, and leads to melting of the toner surface and cohesion of the toner particles which then cease to function as toner particles. In addition, the shape of conventional toner is not spherical but irregular. When irregularly-shaped toner is used, the protruding part of the mother particle is excessively charged, while the sunken-in part is insufficiently charged, thereby producing unequal charge distribution on the toner particle.

The coating of fatty acid metal salt 10a, two kinds of organic particle with different particle size 10b, 10c, and silica 10d on toner mother particle 20 fills the sunken-in part of toner mother particle 20, and thus the toner of the present invention can display a spherical toner-like behavior.

The fatty acid metal salt 10a of coating layer 10 is on the surface of toner mother particle 20, to endow a lubricating property to the toner particle. Thus, the fatty acid metal salt 10a prevents filming where the toner adheres to the surface of organic photo drum, chipping of the cleaning blade, and abrasion of the toner particle. In particular, the fatty acid metal salt 10a is good for preventing excessive adhesion of the toner on the organic photo drum because it has various particle sizes, and good coating property on the toner surface compared to other materials which endow a lubricating property to the toner particle. However, if the fatty acid metal oxide 10a is excessively used, reduction in coating properties of other additives such as silica accelerates the release of the additives. The release of the additives deteriorates the chargeability and tends to increase the adhesion of the toner to the organic photo drum. Therefore, the particle size and the amount of fatty acid metal salt 10a in the coating layer needs to be adjusted.

The average particle size of the fatty acid metal salt is preferably 0.05 to 3.0µm, more preferably 0.5 to 1.5µm. If the particle size of the fatty acid metal salt is less than 0.05µm, the excessively fine particles increase the lubricating property of toner, but is liable to cause filming by diminishing the cleaning property. Also, because the excessively fine particles of fatty acid metal salt cause melt-adhesion of toner on the sleeve surface, the image quality become lower. If the particle size exceeds the range, the excessively large particle size diminishes the coating property of fatty acid metal salt, thereby becoming susceptible to release. Also, it causes an ill effect on the coating property of toner, such as other fine additives such as silica coating the surface of the fatty acid metal salt, and long-term stability and image characteristics is deteriorated.

In addition, the amount of the fatty acid metal salt is 0.1 to 2.0 parts by weight, more preferably 0.5 to 1.5 parts by weight on the basis of the toner mother particle of 100 parts by weight. If the amount is less than the limit, the effect derived from addition of the fatty acid metal salt cannot be obtained. If the amount exceeds the limit, a large quantity of the fatty acid metal salt exists on the surface of the toner particle thereby decreasing coating by other additives. The release of such other additives contaminates the charging elements more, and reduces the transfer efficiency and long-term reliability.

For the fatty acid metal salt in the present invention, metal salt of C4 to C40 natural or synthetic fatty acid with C4 to C40, preferably C12 to C18 can be used.

The fatty acid can be saturated or unsaturated, and can include hydroxyl, aldehyde, or epoxy group. Examples of the fatty acid are one or more selected from the group consisting of caproic acid, caprylic acid, capric acid, lauric acid, myristic acid, palmitic acid, palmitoleic acid, stearic acid, oleic acid, linoleic acid, linolenic acid, arachidic acid, arachidonic acid, behenic acid, montenic acid, iso-stearic acid, and epoxy stearic acid. Examples of metal are one or more selected from the group consisting of Na, K, Al, Ca, Zn, Mg, Co, Fe, Mn, Ba, Vd and Sn.

The fatty acid metal salt of the present invention, for example when the fatty acid is stearic acid, the metal salt includes sodium strearate, potassium stearate, calcium stearate, barium stearate, magnesium stearate, zinc stearate, aluminum stearate, and etc. the content of the metal contained in the fatty acid metal salt is equal to or less than 10 wt%, preferably 2.0 wt% to 10 wt%. If the metal content is more than 10 wt%, it cannot endow a lubricating property on toner particle, but increase the conductivity, thereby lowering chargeability of the toner and its coating property of toner mother particle. If the metal content is less than 2.0 wt%, the chargeability of the toner can be improved by charge accumulation of the fatty acid metal salt, but cannot provide sufficient lubricating property, nor lower the contamination. The reason for limiting the metal content in fatty acid metal salt is that different charge accumulation caused by the metal content affects chargeability of the toner particle, and that different coating property of toner mother particle affects contamination of the charging elements.

The organic particle including the first organic particle 10b and the second organic particle 10b contained in the coating layer 10 reduces the friction resistance met by the toner between the sleeve and the charging blade, by contacting the charging blade during charging of the drum surface. Thus, the organic particle prevents the toner from solid adhesion on drum or roller.

In particular, the first organic particle 10b is a large organic particle having an average particle size of 0.3 to 2.0 µm, preferably 0.4 to 2.0 µm. The second organic particle 10c is a small organic particle having an average particle size of 0.05 to 0.25 µm, preferably 0.1 to 0.15 µm.

The first organic particle such as the first organic particle 10b prevents excessive charging in part by reducing friction heat generated in the charging blade and sleeve in the charging process, which improves the uniform charge distribution and long-term stability. If the average particle size of the large organic particle is more than 2.0 µm, the increased interval between the charging blade and sleeve provides insufficient charging, or another part of the toner mother particle is susceptible to adhesion due to high pressure. If the particle size is less than 0.3 µm, it is difficult to obtain objective function to reduce friction between the charging blade and sleeve..

Unlike the large organic particle, the small organic particle such as the second organic particle 10c contributes to improving the chargeability and uniform charge distribution of toner, rather than reduce friction heat. In other words, the small organic particle has high chargeability and large surface area, and thus contributes to chargeability more than the large organic particle. In addition, the small organic particle can reduce the load on cleaning blade in the cleaning for OPC drum. Therefore, charge maintenance and long-term reliability can be achieved by using the large organic particle in combination with the small organic particle, in order to utilize the effect of each particle size.

The amount of the first organic particle 10b is 0.1 to 1.5 parts by weight based on the toner mother particle of 100 parts by weight. The amount of the second organic particle 10c is 0.05 to 2.0 parts by weight, preferably 0.1 to 1.5 parts by weight based on the toner mother particle of 100 parts by weight.

If the amount of the first organic particle 10b is below the range, it is difficult to achieve uniform charge distribution from a reduction in excessive friction force. If the amount of the first organic particle exceeds the range, uniform charge distribution can be achieved, but the toner is liable to adhesion from excessive pressure due to excessive coherence in a part of the large organic particle. In addition, when the amount of the large organic particle used is excessive, the large organic particle with poor coating property is susceptible to release from the toner mother particle 10, and then contaminates the charging roller. Thus, the reduction in transfer efficiency makes it difficult to achieve charge maintenance.

In addition, if the amount of the second organic particle 10c is less than the range, it is difficult to achieve high chargeability from the small organic particle with high chargeability. On the other hand, if it exceeds the range, high chargeability can be obtained, but the excessive amount of small organic particle is released from the toner surface to cause the contamination of the charging element and transfer belt during the printing process, and leads to a decline in image quality and transfer efficiency.

The organic particle can be a polymer which is generally used in the art. Examples of the polymer are (a) a homopolymer or copolymer prepared by one or more monomers selected from the group consisting of styrenes such as styrene, methylstyrene, dimethylstyrene, ethyl styrene, phenyl styrene, chloro styrene, hexyl styrene, octyl styrene, and nonyl styrene; vinylhalides such as vinylchloride and vinylfluoride; vinylesters such as vinylacetate and vinylbenzoate; methacrylates such as methylmethacrylate, ethyl methacrylate, propyl methacrylate, n-butyl methacrylate, iso-butyl methacrylate, 2-ethylhexyl methacrylate, and phenyl methacrylate; acrylic acid derivatives such as acrylonitrile and methacrylonitrile; acrylates such as methylacrylate, ethylacrylate, butylacrylate, and phenylacrylate; tetrafluoroethylene; and 1,1-difluoroethylene. Examples of polymer include (b) a polymer selected from the group consisting of the homopolymer and the copolymer, blended with a resin selected from the group consisting of styrene-based resin, epoxy-based resin, polyester-based resin, and polyurethane-based resin.

The silica of coating layer 10 lowers adhesion of toner to drum due to good exfoliation. The silica preferably has an average particle size of 0.006-0.04µm(6nm to 40nm), preferably 0.01-0.02µm(10nm to 20nm)10-40 nm. If the particle size of the silica exceeds the range, it is susceptible to release from the toner mother particle. If the particle size of the silica is below the range, the reduction in the adhesion of toner to the drum is insufficient.

The amount of silica is determined in consideration of its particle size and the adhesion force between the toner and drum. It comprises 1.0 to 4.0 parts by weight with respect to the 100 parts by weight of toner mother particle. If the amount of silica is more than 4.0 parts by weight, it is susceptible to release from the toner mother particle, and causes uneven image at low temperature and low humidity and serious contamination of non-printed region at high temperature and high humidity due to its environmental dependence. On the other hand, if the amount of silica is less than 1.0 part by weight, it is difficult to reduce the adhesion force of toner, thereby lowering the transfer efficiency.

Silica 10d treated for hydrophobicity because of its innate property or the effect of the moisture during long-term storage which lowers the image density, can be used hydrophobic treatment of the silica surface can be performed by silane compounds such as a surface modifying agent selected from the group consisting of dimethyldichlorosilane, dimethylpolysiloxane, hexamethyldisilazane, aminosilane, alkylsilane of C1 to C20, and octamethylcyclotetrasiloxane.

As shown in Fig.1, in the present invention a toner particle is prepared by coating irregularly-shaped toner mother particle with fatty acid metal salt 10a, two kinds of the organic particle having different average particle size 10b, 10c, and silica 10d to provide a spherical toner particle

The thickness of the coating layer is 30 nm to 2.0µm. The fatty acid metal salt, organic particle and silica filled the sunken-in part of toner mother particle, but not uniformly coats the toner mother particle. Thus, the particle size of the color toner can be different in part from that of the toner mother particle, but the number average particle size of the toner does not affected by the unevenly distributed coating material.

The toner mother particle used in the present invention is not particularly limited, and comprises a binder resin, and a colorant as essential components.

The toner mother particle 20 can be prepared by kneading-crushing, suspension-polymerization, emulsion-polymerization, or emulsion-aggregate, etc., or can be commercially purchased. The toner mother particle can be spherical or irregular-shaped.

The binder resin may be one or a mixture of: an acrylate-based polymer such as poly(methylacrylate), poly(ethylacrylate), poly(butyacrylate), poly(2-ethylhexylacrylate), and poly(laurylacrylate); a methacrylate-based polymer such as poly(methylmethacrylate), poly(butylmethacrylate), poly(hexylmethacrylate), poly(2-ethylhexylmethacrylate), and poly(laurylmethacrylate); an acrylate methacrylate copolymer; a copolymer of styrene-based monomer and acrylates or methacrylates; an ethylene-based homopolymer or copolymer such as poly(vinylacetate), poly(vinylpropinate), poly(vinylbutyrate), polyethylene and polypropylene; a styrene-based copolymer such as styrene-butadiene copolymer, styrene-isoprene copolymer, styrene-malerate copolymer; a polystryrene base resin; a polyvinylether based resin; a polyvinylketone based resin; a polyester based resin; a polyurethane based resin; an epoxy resin; or a silicone resin.

Preferably, the polymer is at least one selected from the group consisting of polystyrene-based resin, polyester-based resin, polyethylene resin, polypropylene resin,styrene alkylacrylate copolymer of C1 to C18, stryrene alkylmethacrylate copolymer, styrene acrylonitrile copolymer, styrene butadiene copolymer, and styrene malerate copolymer.

The colorant is used for forming a visible image at a sufficient concentration. A magnetic dye or pigment exhibiting cyan, magenta, yellow or black, which are generally used in color printing can be used in the present invention. Carbon black is usually used as a black colorant.

For the cyan colorant, a nigrosine dye, aniline blue, charcoal blue, methylene blue, phthalocyanine blue, lamp black, Prussian blue, C.I. pigments blue 9, 15, 15:1, and 15:3.can be used.

For the magenta colorant, dupont oil red, rose Bengal, C.I. pigment red 48:1, C.I. pigment red 48:4, C.I. pigment red 122, C.I. pigment red 57:1, C.I. pigment red 257, and C.I. pigment red 296 can be used.

For the yellow colorant, Chrome yellow chloride, C.I. pigment yellow 97, C.I. pigment yellow 12, C.I. pigment yellow 17, C.I. pigment yellow 14, C.I. pigment yellow 13. C.I. pigment yellow 16, C.I. pigment yellow 81, C.I. pigment yellow 126, and C.I. pigment yellow 127.

The toner mother particle 20, if necessary, can further contain additives such as a fluidity accelerator, a releasing agent, a charge control agent, etc.

An inorganic oxide fine particle such as SiO₂, TiO₂, MgO, Al₂O₃, MnO, ZnO, Fe₂O₃, CaO, BaSO₄, CeO₂, K₂O, Na₂O, ZrO₂, CaO·SiO, K₂O·(TiO₂)ₙ and Al₂O₃·2SiO₂ hydrophobic-treated with hexamethyldisilazane, dimethyldichlorosilane, octyltrimethoxysilane, etc. may be added to the toner mother particle as a fluidity accelerator, the amount of which is selected from a range generally used.

The releasing agent is used for preventing off-set of toner mother particle 20. Examples of the releasing agent are wax and low molecular weight olefin resin generally used in the art. Typically, the olefin resin is preferably polypropylene, polyethylene, and propylene ethylene copolymer, etc.

The charge control agent is a metal-containing azo salt, salicylic acid metal complex, Cr-containing organic dye or quaternary ammonium salt.

To prepare the non-magnetic mono-component color toner by using the composition described above, the toner mother particle comprising binder resin, colorant and releasing agent are put into a mixer such as a turbine type stirrer, a HENSCHEL mixer, a super mixer or a hybridizer.

Fatty acid metal salt, the large organic particle, small organic particle, and silica are put into the stirrer in a defined weight ratio against the toner mother particle, and then are mechanically mixed at a tip speed of 10-30 m/sec. Because high shear force is required to adhere the first and second organic particle to the toner mother particle, it is very important to control the mixing speed.

In particular, in the conventional method of preparing the toner particle adhesion is achieved by electrostatic attraction upon simple mixing, but the present invention fixes the fatty acid metal salt, organic particle, and silica on the surface of the toner mother particle through the mechanical mixing method.

The non-magnetic mono-component color toner of the present invention has an average particle size of less than 20 µm, preferably 3.0 to 9.0 µm, and is spherical with an aspect ratio of short radius against the long radius 0.3 to 0.8. The fatty acid metal salt, First organic particle and silica fill in the sunken-in part of toner mother particle, but do not uniformly coat the toner mother particle. Thus, the number average particle size of the coated toner particle does not so much increase compared to the toner mother particle, but is more spherical.

In the color toner of the present invention, the coating layer is uniformly formed on the mother particle, and thus displays a sphere-like behavior. Thus, it provides an improvement in the transfer efficiency and long-term stability, achieves high chargeability, charge maintenance, and clear color by reducing the contamination of the charging element. The toner is more environmentally friendly and can reproduce a more stable image while satisfying the need for higher resolution.

The color toner with such properties are preferably applied to the indirect transfer method or tandem method of high-speed color printing which is popular in the recent trend towards full color and high speed.

Unless specified otherwise, the average particle size mentioned in the description of the present invention is number-average particle size, and the amount of all components is parts by weight,

Hereinafter, the present invention is described in more detail through examples. However, the following examples are given only for the understanding of the present invention and they do not limit the present invention.

### <EXAMPLE 1>

### 1) Preparation of magenta toner mother particle

92 parts by weight of polyester resin (molecular weight = 2.5 x 10⁴), 5 parts by weight of quinacridone Red 122, 1 part by weight of tertiary ammonium salt, 2 parts by weight of polypropylene having a low molecular weight were mixed using a HENSCHEL mixer. The mixture was melted and kneaded at 165 □ using a twin melt kneader, crushed using a jet mil crusher, and classified using an air classifier to obtain a toner mother particle having a volume-average particle size of 9.0 µm.

### 2) Preparation of non-magnetic mono-component color toner

As indicated in Table 1 with respect to 100 parts by weight of the toner mother particle prepared in the above, 5 parts by weight of fatty acid metal salt A 100 parts by weight having an average particle size 0.5 µm including Mg less than 5 wt%, 0.1 parts by weight of polyvinylidene fluoride(PVDF) having average particle size 0.1 µm as the first spherical organic particle, and 0.1 parts by weight of polytetrafluoroethylene(PTFE) having an average particle size 2.0 µm as the second spherical organic particle were coated on the toner mother particle.

In the above, 2 parts by weight of silica having an average particle size of 12 nm were stirred and mixed with the organic particles at for 5 minutes at a tip speed of at least 20 m/s, and coated on the toner mother particle to prepare the non-magnetic mono-component color toner.

**TABLE 1**

| Fatty acid metal salt | Metal | Metal content | Fatty acid |
|---|---|---|---|
| Fatty acid metal salt A | Mg | less than 5 wt% | caprylic acid |
| Fatty acid metal salt B | Mg | less than 5 wt% | stearic acid |
| Fatty acid metal salt C | Mg | less than 5 wt% | oleic acid |
| Fatty acid metal salt D | Ca | less than 5 wt% | iso-stearic acid |
| Fatty acid metal salt E | Ca | less than 5 wt% | stearic acid |
| Fatty acid metal salt F | Ca | 5-10% | oleic acid |
| Fatty acid metal salt G | Al | 5-10% | caproic acid |
| Fatty acid metal salt H | Al | 5-10% | stearic acid |
| Fatty acid metal salt I | Al | 5-10% | oleic acid |
| Fatty acid metal salt J | Zn | 5-10% | stearic acid |
| Fatty acid metal salt K | Zn | more than 10 wt% | lauric acid |
| Fatty acid metal salt L | Zn | more than 10 wt% | caprylic acid |
| Fatty acid metal salt M | Zn | more than 10 wt% | stearic acid |
| Fatty acid metal salt N | Pb | more than 10 wt% | stearic acid |

### <EXAMPLE 2~121 >

Examples 2-121 were performed according to substantially the same method as in Example 1, except that fatty acid metal salt and organic particle were used as shown in Table 1. The fatty acid contained Na, K, Al, Ca, Zn, Mg, Co, Fe, Mn, Ba, Vd or Sn as a metal, and caproic acid, carylic acid, lauric acid, oleic acid, stearic acid, iso-stearic acid as a fatty acid.

**TABLE 2a**

| EXAMPLE | Fatty acid metal salt (particle size, type, amount) | First organic particle (particle size, type, amount) | Second organic particle (particle size, type, amount) |
|---|---|---|---|
| 2 | 0.5µm, Fatty acid metal saltA, 0.5 | 2.0µm, PMMA 0.1 | 0.1µm, PVDF 0.1 |
| 3 | 0.5µm, Fatty acid metal salt A 0.5 | 2.0µm, PTFE 1.5 | 0.1µm, PVDF 0.1 |
| 4 | 0.5µm, Fatty acid metal salt A 0.5 | 2.0µm, PMMA 1.5 | 0.1µm, PVDF 0.1 |
| 5 | 0.5µm, Fatty acid metal salt A 0.5 | 2.0µm, PTFE 0.1 | 0.1µm, PVDF 1.5 |
| -6 | 0.5µm, Fatty acid metal salt A 0.5 | 2.0µm, PMMA 0.1 | 0.1µm, PVDF 1.5 |
| 7 | 0.5µm, Fatty acid metal salt A 0.5 | 2.0µm, PTFE 1.5 | 0.1µm, PVDF 1.5 |
| 8 | 0.5µm, Fatty acid metal salt A 0.5 | 2.0µm, PMMA 1.5 | 0.1µm, PVDF 1.5 |
| 9 | 0.5µm, Fatty acid metal salt B 0.5 | 2.0µm, PTFE 0.5 | 0.1µm, PVDF 0.5 |
| 10 | 0.5µm, Fatty acid metal salt B 0.5 | 2.0µm, PMMA 0.5 | 0.1µm, PVDF 0.5 |
| 11 | 0.5µm, Fatty acid metal salt B 0.5 | 0.4µm, PVDF 0.1 | 0.1µm, PVDF 0.1 |
| 12 | 0.5µm, Fatty acid metal salt B 0.5 | 0.4µm, PMMA 0.1 | 0.1µm, PVDF 0.1 |
| 13 | 0.5µm, Fatty acid metal salt B 0.5 | 0.4µm, PVDF 0.1 | 0.1µm, PVDF 1.5 |
| 14 | 0.5µm, Fatty acid metal salt B 0.5 | 0.4µm, PMMA 0.1 | 0.1µm, PVDF 1.5 |
| 15 | 0.5µm, Fatty acid metal salt B 0.5 | 0.4µm, PVDF 1.5 | 0.1µm, PVDF 0.1 |
| 16 | 0.5µm, Fatty acid metal salt B 0.5 | 0.4µm, PMMA 1.5 | 0.1µm, PVDF 0.1 |
| 17 | 0.5µm, Fatty acid metal salt B 0.5 | 0.4µm, PVDF 1.5 | 0.1µm, PVDF 1.5 |
| 18 | 0.5µm, Fatty acid metal salt C 0.5 | 0.4µm, PMMA 1.5 | 0.1µm, PVDF 1.5 |
| 19 | 0.5µm, Fatty acid metal salt C 0.5 | 0.4µm, PMMA 0.5 | 0.1µm, PVDF 0.5 |
| 20 | 0.5µm, Fatty acid metal salt C 0.5 | 0.4µm, PVDF 0.1 | 0.15µm, PMMA 0.1 |

**TABLE 2b**

| EXAMPLE | Fatty acid metal salt (particle size, type, amount) | First organic particle (particle size, type, amount) | Second organic particle (particle size, type, amount) |
|---|---|---|---|
| 21 | 0.5µm, Fatty acid metal salt C 0.5 | 0.4µm, PMMA 0.1 | 0.15µm, PMMA 0.1 |
| 22 | 0.5µm, Fatty acid metal salt D 0.5 | 0.4µm, PVDF 1.5 | 0.15µm, PMMA 1.5 |
| 23 | 0.5µm, Fatty acid metal salt D 0.5 | 0.4µm, PMMA 1.5 | 0.15µm, PMMA 1.5 |
| 24 | 0.5µm, Fatty acid metal salt D 0.5 | 0.4µm, PVDF 0.1 | 0.15µm, PMMA 1.5 |
| 25 | 0.5µm, Fatty acid metal salt D 0.5 | 0.4µm, PMMA 0.1 | 0.15µm, PMMA 1.5 |
| 26 | 0.5µm, Fatty acid metal salt D 0.5 | 0.4µm, PVDF 1.5 | 0.15µm, PMMA 0.1 |
| 27 | 0.5µm, Fatty acid metal salt D 0.5 | 0.4µm, PMMA 1.5 | 0.15µm, PMMA 0.1 |
| 28 | 0.5µm, Fatty acid metal salt D 0.5 | 0.4µm, PVDF 0.5 | 0.15µm, PMMA 0.5 |
| 29 | 0.5µm, Fatty acid metal salt D 0.5 | 0.4µm, PMMA 0.5 | 0.15µm, PMMA 0.5 |
| 30 | 0.5µm, Fatty acid metal salt E 0.5 | 2.0µm, PTFE 0.1 | 0.15µm, PMMA 0.1 |
| 31 | 0.5µm, Fatty acid metal salt E 0.5 | 2.0µm, PMMA 0.1 | 0.15µm, PMMA 0.1 |
| 32 | 0.5µm, Fatty acid metal salt E 0.5 | 2.0µm, PTFE 1.5 | 0.15µm, PMMA 1.5 |
| 33 | 0.5µm, Fatty acid metal salt E 0.5 | 2.0µm, PMMA 1.5 | 0.15µm, PMMA 1.5 |
| 34 | 0.5µm, Fatty acid metal salt E 0.5 | 2.0µm, PTFE 0.1 | 0.15µm. PMMA 1.5 |
| 35 | 0.5µm, Fatty acid metal salt E 0.5 | 2.0µm, PMMA 0.1 | 0.15µm, PMMA 1.5 |
| 36 | 0.5µm, Fatty acid metal salt E 0.5 | 2.0µm, PTFE 1.5 | 0.15µm, PMMA 0.1 |
| 37 | 0.5µm, Fatty acid metal salt E 0.5 | 2.0µm, PMMA 1.5 | 0.15µm, PMMA 0.1 |
| 38 | 0.5µm, Fatty acid metal salt E 0.5 | 2.0µm, PTFE 0.5 | 0.15µm, PMMA 0.5 |
| 39 | 0.5µm, Fatty acid metal salt E 0.5 | 2.0µm, PMMA 0.5 | 0.15µm, PMMA 0.5 |
| 40 | 1.5µm, Fatty acid metal salt F 1.5 | 2.0µm, PMMA 0.1 | 0.1µm, PVDF 0.1 |

**TABLE 2c**

| EXAMPLE | Fatty acid metal salt (particle size, type, amount) | First organic particle (particle size, type, amount) | Second organic particle (particle size, type, amount) |
|---|---|---|---|
| 41 | 1.5µm, Fatty acid metal salt F 1.5 | 2.0µm, PTFE 1.5 | 0.1µm, PVDF 0.1 |
| 42 | 1.5µm, Fatty acid metal salt F 1.5 | 2.0µm, PMMA 1.5 | 0.1 µm, PVDF 0.1 |
| 43 | 1.5µm, Fatty acid metal salt F 1.5 | 2.0µm, PTFE 0.1 | 0.1µm, PVDF 1.5 |
| 44 | 1.5µm, Fatty acid metal salt F 1.5 | 2.0µm, PMMA 0.1 | 0.1 µm, PVDF 1.5 |
| 45 | 1.5µm, Fatty acid metal salt F 1.5 | 2.0µm, PTFE 1.5 | 0.1 µm, PVDF 1.5 |
| 46 | 1.5µm, Fatty acid metal salt F 1.5 | 2.0µm, PMMA 1.5 | 0.1 µm, PVDF 1.5 |
| 47 | 1.5µm, Fatty acid metal salt F 1.5 | 2.0µm, PTFE 0.5 | 0.1µm, PVDF 0.5 |
| 48 | 1.5µm, Fatty acid metal salt G 1.5 | 2.0µm, PMMA 0.5 | 0.1µm, PVDF 0.5 |
| 49 | 1.5µm, Fatty acid metal salt G 1.5 | 0.4µm, PVDF 0.1 | 0.1µm, PVDF 0.1 |
| 50 | 1.5µm, Fatty acid metal salt G 1.5 | 0.4µm, PMMA 0.1 | 0.1µm, PVDF 0.1 |
| 51 | 1.5µm, Fatty acid metal salt G 1.5 | 0.4µm, PVDF 0.1 | 0.1µm, PVDF 1.5 |
| 52 | 1.5µm, Fatty acid metal salt G 1.5 | 0.4µm, PMMA 0.1 | 0.1µm, PVDF 1.5 |
| 53 | 1.5µm, Fatty acid metal salt G 1.5 | 0.4µm, PVDF 1.5 | 0.1µm, PVDF 0.1 |
| 54 | 1.5µm, Fatty acid metal salt G 1.5 | 0.4µm, PMMA 1.5 | 0.1µm, PVDF 0.1 |
| 55 | 1.5µm. Fatty acid metal salt G 1.5 | 0.4µm, PVDF 1.5 | 0.1µm, PVDF 1.5 |
| 56 | 0.5µm, Fatty acid metal salt H 0.5 | 2.0µm, PMMA 0.1 | 0.1µm, PVDF 0.1 |
| 57 | 0.5µm, Fatty acid metal salt H 0.5 | 2.0µm, PTFE 1.5 | 0.1 µm, PVDF 0.1 |
| 58 | 0.5µm, Fatty acid metal salt H 0.5 | 2.0µm, PMMA 1.5 | 0.1µm PVDF 0.1 |
| 59 | 0.5µm, Fatty acid metal salt H 0.5 | 2.0µm, PTFE 0.1 | 0.1µm, PVDF 1.5 |
| 60 | 0.5µm, Fatty acid metal salt H 0.5 | 2.0µm, PMMA 0.1 | 0.1µm, PVDF 1.5 |

**TABLE 2d**

| EXAMPLE | Fatty acid metal salt (particle size, type, amount) | First organic particle (particle size, type, amount) | Second organic particle (particle size, type, amount) |
|---|---|---|---|
| 61 | 0.5µm, Fatty acid metal salt H 0.5 | 2.0µm, PTFE 1.5 | 0.1µm, PVDF 1.5 |
| 62 | 0.5µm, Fatty acid metal salt H 0.5 | 2.0µm, PMMA 1.5 | 0.1µm, PVDF 1.5 |
| 63 | 0.5µm, Fatty acid metal salt 10.5 | 2.0µm, PMMA 0.1 | 0.1 µm, PVDF 0.1 |
| 64 | 0.5µm, Fatty acid metal salt I0.5 | 2.0µm, PTFE 1.5 | 0.1µm, PVDF 0.1 |
| 65 | 0.5µm, Fatty acid metal salt I 0.5 | 2.0µm, PMMA 1.5 | 0.1µm, PVDF 0.1 |
| 66 | 0.5µm, Fatty acid metal salt I 0.5 | 2.0µm, PTFE 0.1 | 0.1 µm, PVDF 1.5 |
| 67 | 0.5µm, Fatty acid metal salt I 0.5 | 2.0µm, PMMA 0. 1 | 0.1µm, PVDF 1.5 |
| 68 | 0.5µm, Fatty acid metal salt I 0.5 | 2.0µm, PTFE 1.5 | 0.1µm, PVDF 1.5 |
| 69 | 0.5µm, Fatty acid metal salt I 0.5 | 2.0µm, PMMA 1.5 | 0.1µm, PVDF 1.5 |
| 70 | 0.5µm, Fatty acid metal salt J 0.5 | 2.0µm, PMMA 0.1 | 0.1 µm, PVDF 0.1 |
| 71 | 0.5µm, Fatty acid metal salt J 0.5 | 2.0µm, PTFE 1.5 | 0.1µm, PVDF 0.1 |
| 72 | 0.5µm, Fatty acid metal salt J 0.5 | 2.0µm, PMMA 1.5 | 0.1µm, PVDF 0.1 |
| 73 | 0.5µm, Fatty acid metal salt J 0.5 | 2.0µm, PTFE 0.1 | 0.1µm, PVDF 1.5 |
| 74 | 0.5µm, Fatty acid metal salt J 0.5 | 2.0µm, PMMA 0.1 | 0.1µm PVDF 1.5 |
| 75 | 0.5µm, Fatty acid metal salt J 0.5 | 2.0µm, PTFE 1.5 | 0.1 µm, PVDF 1.5 |
| 76 | 0.5µm, Fatty acid metal salt J 0.5 | 2.0µm, PMMA 1.5 | 0.1µm, PVDF 1.5 |
| 77 | 0.5µm, Fatty acid metal salt K 0.5 | 2.0µm, PMMA 0.1 | 0.1µm, PVDF 0.1 |
| 78 | 0.5µm, Fatty acid metal salt K 0.5 | 2.0µm, PTFE 1.5 | 0.1 µm, PVDF 0.1 |
| 79 | 0.5µm, Fatty acid metal salt K 0.5 | 2.0µm, PMMA 1.5 | 0.1µm, PVDF 0.1 |
| 80 | 0.5µm, Fatty acid metal salt K 0.5 | 2.0µm, PTFE 0.1 | 0.1µm, PVDF 1.5 |

**TABLE 2e**

| EXAMPLE | Fatty acid metal salt (particle size, type, amount) | First organic particle (particle size, type, amount) | Second organic particle (particle size, type, amount) |
|---|---|---|---|
| 81 | 0.5µm, Fatty acid metal salt K 0.5 | 2.0µm, PMMA 0.1 | 0.1µm, PVDF 1.5 |
| 82 | 0.5µm, Fatty acid metal salt K 0.5 | 2.0µm, PTFE 1.5 | 0.1µm,PVDF 1.5 |
| 83 | 0.5µm, Fatty acid metal salt K 0.5 | 2.0µm, PMMA 1.5 | 0.1 µm,PVDF 1.5 |
| 84 | 0.5µm, Fatty acid metal salt L 0.5 | 2.0µm, PMMA 0.1 | 0.1µm, PVDF 0.1 |
| 85 | 0.5µm, Fatty acid metal salt L 0.5 | 2.0µm, PTFE 1.5 | 0.1µm, PVDF 0.1 |
| 86 | 0.5µm, Fatty acid metal salt L 0.5 | 2.0µm, PMMA 1.5 | 0.1 µm, PVDF 0.1 |
| 87 | 0.5µm, Fatty acid metal salt L 0.5 | 2.0µm, PTFE 0.1 | 0.1µm, PVDF 1.5 |
| 88 | 0.5µm, Fatty acid metal salt L 0.5 | 2.0µm, PMMA 0.1 | 0.1µm, PVDF 1.5 |
| 89 | 0.5µm, Fatty acid metal salt M 0.5 | 2.0µm, PMMA 0.1 | 0.1µm, PVDF 0.1 |
| 90 | 0.5µm, Fatty acid metal salt M 0.5 | 2.0µm, PTFE 1.5 | 0.1µm, PVDF 0.1 |
| 91 | 0.5µm, Fatty acid metal salt M 0.5 | 2.0µm, PMMA 1.5 | 0.1µm, PVDF 0.1 |
| 92 | 0.5µm,Fatty acid metal salt M 0.5 | 2.0µm, PTFE 0.1 | 0.1µm, PVDF 1.5 |
| 93 | 0.5µm, Fatty acid metal salt M 0.5 | 2.0µm, PMMA 0.1 | 0.1µm, PVDF 1.5 |
| 94 | 0.5µm, Fatty acid metal salt N 0.5 | 2.0µm, PMMA 0.1 | 0.1µm, PVDF 0.1 |
| 95 | 0.5µm, Fatty acid metal salt N 0.5 | 2.0µm, PTFE 1.5 | 0.1µm, PVDF 0.1 |
| 96 | 0.5µm, Fatty acid metal salt N 0.5 | 2.0µm, PMMA 1.5 | 0.1µm, PVDF 0.1 |
| 97 | 0.5µm, Fatty acid metal salt N 0.5 | 2.0µm, PTFE 0.1 | 0.1µm, PVDF 1.5 |
| 98 | 0.5µm, Fatty acid metal salt N 0.5 | 2.0µm, PMMA 0.1 | 0.1µm, PVDF 1.5 |
| 99 | 1.5µm, Fatty acid metal salt A 1.5 | 0.4µm, PMMA 1.5 | 0.1µm, PVDF 1.5 |
| 100 | 1.5µm, Fatty acid metal salt B 1.5 | 0.4µm, PMMA 0.5 | 0.1µm, PVDF 0.5 |

**TABLE 2f**

| EXAMPLE | Fatty acid metal salt (particle size, type, amount) | First organic particle (particle size, type, amount) | Second organic particle (particle size, type, amount) |
|---|---|---|---|
| 101 | 1.5µm,Fatty acid metal salt C 1.5 | 0.4µm, PVDF 0.1 | 0.15µm, PMMA 0.1 |
| 102 | 1.5µm,Fatty acid metal salt D 1.5 | 0.4µm, PMMA 0.1 | 0.15µm, PMMA 0.1 |
| 103 | 1.5µm,Fatty acid metal salt E 1.5 | 2.0µm, PMMA 0.1 | 0.1µm, PVDF 0.1 |
| 104 | 1.5µm,Fatty acid metal salt F 1.5 | 2.0µm, PTFE 1.5 | 0.1 µm, PVDF 0.1 |
| 105 | 1.5µm,Fatty acid metal salt G 1.5 | 0.4µm, PVDF 1.5 | 0.15µm, PMMA 1.5 |
| 106 | 1.5µm,Fatty acid metal salt H 1.5 | 0.4µm, PMMA 1.5 | 0.15µm, PMMA 1.5 |
| 107 | 1.5µm,Fatty acid metal salt I 1.5 | 0.4µm, PVDF 0.1 | 0.15µm, PMMA 1.5 |
| 108 | 1.5µm, Fatty acid metal salt J 1.5 | 0.4µm, PMMA 0.1 | 0.15µm, PMMA 1.5 |
| 109 | 1.5µm, Fatty acid metal salt K 1.5 | 0.4µm, PVDF 1.5 | 0.1µm, PMMA 0.1 |
| 110 | 1.5µm, Fatty acid metal salt L 1.5 | 0.4µm, PMMA 1.5 | 0.15µm, PMMA 0.1 |
| 111 | 1.5µm, Fatty acid metal salt M 1.5 | 0.4µm, PVDF 0.5 | 0.15µm, PMMA 0.5 |
| 112 | 1.5µm, Fatty acid metal salt N 1.5 | 0.4µm, PMMA 0.5 | 0.15µm, PMMA 0.5 |
| 113 | 1.5µm, Fatty acid metal salt A 1.5 | 2.0µm, PTFE 0.1 | 0.15µm, PMMA 0.1 |
| 114 | 1.5µm, Fatty acid metal salt B 1.5 | 2.0µm,PMMA 0.1 | 0.15µm,PMMA 0.1 |
| 115 | 1.5µm, Fatty acid metal salt C 1.5 | 2.0 µm, PTFE 1.5 | 0.15µm,PMMA 1.5 |
| 116 | 1.5µm, Fatty acid metal salt D 1.5 | 2.0µm, PMMA 1.5 | 0.15µm,PMMA 1.5 |
| 117 | 1.5µm, Fatty acid metal salt E 1.5 | 2.0µm, PTFE 0.1 | 0.15µm, PMMA 1.5 |
| 118 | 1.5µm, Fatty acid metal salt F 1.5 | 2.0µm, PMMA 0.1 | 0.15µm, PMMA 1.5 |
| 119 | 1.5µm, Fatty acid metal salt G 1.5 | 2.0µm, PTFE 1.5 | 0.15µm. PMMA 0.1 |
| 120 | 1.5µm, Fatty acid metal salt H 1.5 | 2.0µm, PMMA 1.5 | 0.15µm, PMMA 0.1 |
| 121 | 1.5µm, Fatty acid metal salt I 1.5 | 2.0µm, PTFE 0.5 | 0.15µm, PMMA 0.5 |

| | | | |
|---|---|---|---|
| PMMA: polymethylmethacrylate PVDF: polyvinylidene fluoride PTFE: polytetrafluoroetylene | | | |

### COMPARATIVE EXAMPLES

The comparative examples were performed substantially in the same method as in Example 1, except that fatty acid metal salt and organic particles were as indicated in Table 3.

**TABLE 3a**

| Comparative Example | Fatty acid metal salt (particle size, type, amount) | First organic particle (particle size, type, amount) | Second organic particle (particle size, type, amount) |
|---|---|---|---|
| 1 | × | 0.15µm, PMMA 0.5 | 0.1µm, PVDF 0.5 |
| 2 | × | 0.15µm, PMMA 1.5 | 0.1µm, PVDF 1.5 |
| 3 | × | 0.4µm, PMMA 0.5 | 0.1µm, PVDF 0.5 |
| 4 | × | 0.4µm, PMMA 1.5 | 0.2µm, PVDF 1.5 |
| 5 | × | 2.0µm, PMMA 0.5 | 2.0µm, PMMA 0.5 |
| 6 | × | 2.0µm, PMMA 1.5 | 2.0µm, PMMA 1.5 |
| 7 | × | 4.0µm, PTFE 0.5 | 4.0µm, PMMA 0.5 |
| 8 | × | 4.0µm, PTFE 1.5 | 4.0µm, PMMA 1.5 |
| 9 | × | 0.4µm, PVDF 1.0 | 0.1µm, PVDF 0.05 |
| 10 | × | 0.4µm, PVDF 1.0 | 0.1µm PVDF 2.0 |
| 11 | × | 0.4µm, PMMA 1.0 | 0.1µm, PVDF 0.05 |
| 12 | × | 0.4µm, PMMA 1.0 | 0.1µm, PVDF 2.0 |
| 13 | × | 2.0µm, PTFE 1.0 | 0.1µm, PVDF 0.05 |
| 14 | × | 2.0µm, PMMA 1.0 | 0.1µm, PVDF 2.0 |
| 15 | × | 4.0µm, PMMA 1.0 | 0.1µm, PVDF 0.5 |
| 16 | × | 4.0µm, PTFE 1.0 | 0.1µm, PVDF 0.5 |
| 17 | × | 0.4µm, PVDF 1.0 | 0.15µm, PMMA 0.05 |
| 18 | × | 0.4µm, PVDF 1.0 | 0.15 µm, PMMA 2.0 |
| 19 | × | 0.4µm, PMMA 1.0 | 0.15µm, PMMA 0.05 |
| 20 | × | 0.4µm, PMMA 1.0 | 0.15µm, PMMA 2.0 |

**TABLE 3b**

| Comparative Example | Fatty acid metal salt (particle size, type, amount) | First organic particle (particle size, type, amount) | Second organic particle (particle size, type, amount) |
|---|---|---|---|
| 21 | × | 2.0µm, PTFE 1.0 | 0.15µm, PMMA 0.05 |
| 22 | × | 2.0µm, PMMA 1.0 | 0.15µm, PMMA 2.0 |
| 23 | × | 4.0µm, PMMA 1.0 | 0.15µm, PMMA 0.5 |
| 24 | × | 4.0µm, PTFE 1.0 | 0.15µm, PMMA 0.5 |
| 25 | × | 0.4µm, PVDF 0.05 | 0.1 µm, PVDF 0.5 |
| 26 | × | 0.4µm, PVDF 2.0 | 0.1 µm, PVDF 0.5 |
| 27 | × | 0.4µm, PMMA 0.05 | 0.1µm, PVDF 0.5 |
| 28 | × | 0.4µm, PMMA 2.0 | 0.1µm, PVDF 0.5 |
| 29 | × | 2.0µm, PTFE 0.05 | 0.1µm,PVDF 0.5 |
| 30 | × | 2.0µm, PTFE 2.0 | 0.1µm, PVDF 0.5 |
| 31 | × | 2.0µm, PMMA 0.05 | 0.1µm, PVDF 0.5 |
| 32 | × | 2.0µm, PMMA 2.0 | 0.1µm, PVDF 0.5 |
| 33 | × | 0.4µm, PVDF 0.05 | 0.15µm, PMMA 0.5 |
| 34 | × | 0.4µm, PVDF 2.0 | 0.15µm, PMMA 0.5 |
| 35 | × | 0.4µm, PMMA 0.05 | 0.15µm, PMMA 0.5 |
| 36 | × | 0.4µm, PMMA 2.0 | 0.15µm, PMMA 0.5 |
| 37 | × | 2.0µm, PTFE 0.05 | 0.15µm, PMMA 0.5 |
| 38 | × | 2.0µm, PTFE 2.0 | 0.15µm, PMMA 0.5 |
| 39 | × | 2.0µm, PMMA 0.05 | 0.15µm, PMMA 0.5 |
| 40 | × | 4.0µm, PMMA 0.05 | 0.1µm, PVDF 0.05 |

**TABLE 3c**

| Comparative Example | Fatty acid metal salt (particle size, type, amount) | First organic particle (particle size, type, amount) | Second organic particle (particle size, type, amount) |
|---|---|---|---|
| 41 | × | 4.0µm, PTFE 0.05 | 0.1µm, PVDF 0.05 |
| 42 | × | 4.0µm, PMMA 2.0 | 0.1µm, PVDF 0.05 |
| 43 | × | 4.0µm, PTFE 2.0 | 0.1µm, PVDF 0.05 |
| 44 | 0.5µm, Fatty acid metal salt B 0.5 | 0.15µm, PMMA 0.5 | 0.1µm, PVDF 0.5 |
| 45 | 0.5µm, Fatty acid metal salt C 0.5 | 0.15µm, PMMA 1.5 | 0.1µm, PVDF 1.5 |
| 46 | 0.5µm, Fatty acid metal salt D 0.5 | 0.4µm, PMMA 0.5 | 0.4µm, PVDF 0.5 |
| 47 | 0.5µm, Fatty acid metal salt E 0.5 | 0.4µm, PMMA 1.5 | 0.4µm, PVDF 1.5 |
| 48 | 0.5µm, Fatty acid metal salt F 0.5 | 2.0µm, PMMA 0.5 | 2.0µm, PMMA 0.5 |
| 49 | 0.5µm, Fatty acid metal salt G 0.5 | 0.15µm, PMMA 0.5 | 0.1µm, PVDF 0.5 |
| 50 | 0.5µm, Fatty acid metal salt H 0.5 | 0.15µm, PMMA 1.5 | 0.1µm, PVDF 1.5 |
| 51 | 0.5µm, Fatty acid metal salt I 0.5 | 0.4µm, PMMA 0.5 | 0.4µm, PVDF 0.5 |
| 52 | 0.5µm, Fatty acid metal salt J 0.5 | 0.4µm, PMMA 1.5 | 0.4µm, PVDF 1.5 |
| 53 | 0.5µm, Fatty acid metal salt K 0.5 | 2.0µm, PMMA 0.5 | 2.0µm, PMMA 0.5 |
| 54 | 0.5µm, Fatty acid metal salt L 0.5 | 0.15µm, PMMA 0.5 | 0.1µm, PVDF 0.5 |
| 55 | 0.5µm, Fatty acid metal salt M 0.5 | 0.1µm, PMMA 1.5 | 0.1µm, PVDF 1.5 |
| 56 | 0.5µm, Fatty acid metal salt F 0.5 | 2.0µm, PTFE 1.0 | 0.1µm, PVDF 0.05 |
| 57 | 0.5µm, Fatty acid metal salt G 0.5 | 2.0µm, PMMA 1.0 | 0.1µm, PVDF 2.0 |
| 58 | 0.5µm, Fatty acid metal salt A 0.5 | 2.0µm, PMMA 1.0 | 0.1µm, PVDF 2.0 |
| 59 | 0.5µm, Fatty acid metal salt B 0.5 | 2.0µm, PMMA 1.0 | 0.1µm, PVDF 2.0 |
| 60 | 0.5µm, Fatty acid metal salt C 0.5 | 2.0µm, PMMA 1.0 | 0.1µm, PVDF 2.0 |

**TABLE 3d**

| Comparative Example | Fatty acid metal salt (particle size, type, amount) | First organic particle (particle size, type, amount) | Second organic particle (particle size, type, amount) |
|---|---|---|---|
| 61 | 0.5µm, Fatty acid metal salt D 0.5 | 2.0µm, PMMA 1.0 | 0.1µm, PVDF 2.0 |
| 62 | 0.5µm, Fatty acid metal salt E 0.5 | 2.0µm, PMMA 1.0 | 0.1µm, PVDF 2.0 |
| 63 | 0.5µm, Fatty acid metal salt F 0.5 | 2.0µm, PMMA 1.0 | 0.1µm, PVDF 2.0 |
| 64 | 0.5µm, Fatty acid metal salt G 0.5 | 2.0µm, PMMA 1.0 | 0.1µm, PVDF 2.0 |
| 65 | 0.5µm, Fatty acid metal salt A 0.5 | 4.0µm, PMMA 1.0 | 0.1µm, PVDF 0.5 |
| 66 | 0.5µm, Fatty acid metal salt B 0.5 | 4.0µm, PTFE 1.0 | 0.1µm, PVDF 0.5 |
| 67 | 0.5µm, Fatty acid metal salt C 0.5 | 0.4µm, PVDF 1.0 | 0.15µm, PMMA 0.05 |
| 68 | 0.5µm, Fatty acid metal salt D 0.5 | 0.4µm, PVDF 1.0 | 0.1µm, PMMA 2.0 |
| 69 | 0.5µm, Fatty acid metal salt E 0.5 | 0.4µm, PMMA 1.0 | 0.15µm, PMMA 0.05 |
| 70 | 0.5µm, Fatty acid metal salt F 0.5 | 0.4µm, PMMA 1.0 | 0.15µm, PMMA 2.0 |
| 71 | 0.5µm, Fatty acid metal salt G 0.5 | 2.0µm, PTFE 1.0 | 0.15µm, PMMA 0.05 |
| 72 | 0.5µm, Fatty acid metal salt A 0.5 | 2.0µm, PTFE 1.0 | 0.15µm, PMMA 0.05 |
| 73 | 0.5µm, Fatty acid metal salt B 0.5 | 2.0µm, PTFE 1.0 | 0.15µm, PMMA 0.05 |
| 74 | 0.5µm, Fatty acid metal salt C 0.5 | 2.0µm, PTFE 1.0 | 0.15µm, PMMA 0.05 |
| 75 | 0.5µm, Fatty acid metal salt D 0.5 | 2.0µm, PTFE 1.0 | 0.15µm. PMMA 0.05 |
| 76 | 0.5µm, Fatty acid metal salt E 0.5 | 4.0µm, PMMA 1.0 | 0.1µm, PVDF 0.5 |
| 77 | 0.5µm, Fatty acid metal salt F 0.5 | 4.0µm, PMMA 1.0 | 0.1µm, PVDF 0.5 |
| 78 | 0.5µm, Fatty acid metal salt G 0.5 | 4.0µm, PMMA 1.0 | 0.1µm, PVDF 0.5 |
| 79 | 0.5µm, Fatty acid metal salt C 0.5 | 2.0µm, PMMA 1.0 | 0.15µm, PMMA 2.0 |
| 80 | 0.5µm, Fatty acid metal salt B 0.5 | 4.0µm, PMMA 1.0 | 0.15µm, PMMA 0.5 |

**TABLE 3e**

| Comparative Example | Fatty acid metal salt (particle size, type, amount) | First organic particle (particle size, type, amount) | Second organic particle (particle size, type, amount) |
|---|---|---|---|
| 81 | 0.5µm, Fatty acid metal salt C 0.5 | 4.0µm, PTFE 1.0 | 0.15µm, PMMA 0.5 |
| 82 | 0.5µm, Fatty acid metal salt D 0.5 | 0.4µm, PVDF 0.05 | 0.1µm, PVDF 0.5 |
| 83 | 0.5µm, Fatty acid metal salt E 0.5 | 0.4µm, PVDF 2.0 | 0.1µm, PVDF 0.5 |
| 84 | 0.5µm, Fatty acid metal salt F 0.5 | 0.4µm, PMMA 0.05 | 0.1µm, PVDF 0.5 |
| 85 | 0.5µm, Fatty acid metal salt G 0.5 | 0.4µm, PMMA 2.0 | 0.1µm, PVDF 0.5 |
| 86 | 0.5µm, Fatty acid metal salt F 0.5 | 2.0µm, PTFE 0.05 | 0.1µm, PVDF 0.5 |
| 87 | 0.5µm, Fatty acid metal salt B 0.5 | 2.0µm, PTFE 2.0 | 0.1µm, PVDF 0.5 |
| 88 | 0.5µm, Fatty acid metal salt C 0.5 | 2.0µm, PMMA 0.05 | 0.1µm, PVDF 0.5 |
| 89 | 0.5µm, Fatty acid metal salt D 0.5 | 2.0µm, PMMA 2.0 | 0.1µm, PVDF 0.5 |
| 90 | 0.5µm, Fatty acid metal salt E 0.5 | 0.4µm, PVDF 0.05 | 0.15µm, PMMA 0.5 |
| 91 | 0.5µm, Fatty acid metal salt F 0.5 | 0.4µm, PVDF 2.0 | 0.15µm, PMMA 0.5 |
| 92 | 0.5µm, Fatty acid metal salt G 0.5 | 0.4µm, PMMA 0.05 | 0.15µm, PMMA 0.5 |
| 93 | 0.5µm, Fatty acid metal salt B 0.5 | 2.0µm, PMMA 0.05 | 0.1µm, PVDF 0.5 |
| 94 | 0.5µm, Fatty acid metal salt C 0.5 | 2.0µm, PMMA 0.05 | 0.1µm, PVDF 0.5 |
| 95 | 0.5µm, Fatty acid metal salt D 0.5 | 2.0µm, PMMA 0.05 | 0.1µm, PVDF 0.5 |
| 96 | 0.5µm, Fatty acid metal salt E 0.5 | 2.0µm, PMMA 0.05 | 0.1µm,PVDF 0.5 |
| 97 | 0.5µm, Fatty acid metal salt F 0.5 | 2.0µm, PMMA 2.0 | 0.1µm, PVDF 0.5 |
| 98 | 0.5µm, Fatty acid metal salt B 0.5 | 2.0µm, PMMA 2.0 | 0.1µm, PVDF 0.5 |
| 99 | 0.5µm, Fatty acid metal salt C 0.5 | 2.0µm, PMMA 2.0 | 0.1µm, PVDF 0.5 |
| 100 | 0.5µm, Fatty acid metal salt D 0.5 | 0.4µm, PMMA 2.0 | 0.15µm, PMMA 0.5 |

**TABLE 3f**

| Comparative Example | Fatty acid metal salt (particle size, type, amount) | First organic particle (particle size, type, amount) | Second organic particle (particle size, type, amount) |
|---|---|---|---|
| 101 | 0.5 µm, Fatty acid metal salt B 0.5 | 2.0µm, PTFE 0.05 | 0.15µm, PMMA 0.5 |
| 102 | 0.5 µm, Fatty acid metal salt C 0.5 | 2.0µm, PTFE 2.0 | 0.15µm, PMMA 0.5 |
| 103 | 0.5 µm, Fatty acid metal salt D 0.5 | 2.0µm, PMMA 0.05 | 0.15µm, PMMA 0.5 |
| 104 | 0.5 µm, Fatty acid metal salt E 0.5 | 4.0µm, PMMA 0.05 | 0.1µm, PVDF 0.05 |
| 105 | 0.5 µm, Fatty acid metal salt F 0.5 | 4.0µm, PTFE 0.05 | 0.1µm, PVDF 0.05 |
| 106 | 0.5 µm, Fatty acid-metal salt G 0.5 | 4.0µm, PMMA 2.0 | 0.1µm, PVDF 0.05 |
| 107 | 0.5 µm, Fatty acid metal salt B 0.5 | 0.4µm, PMMA 2.0 | 0.15µm, PMMA 0.5 |
| 108 | 0.5 µm, Fatty acid metal salt C 0.5 | 2.0µm, PTFE 0.05 | 0.15µm, PMMA 0.5 |
| 109 | 0.5 µm, Fatty acid metal salt D 0.5 | 2.0µm, PTFE 0.05 | 0.15µm, PMMA 0.5 |
| 110 | 0.5 µm, Fatty acid metal salt E 0.5 | 2.0µm, PTFE 0.05 | 0.15µm, PMMA 0.5 |
| 111 | 0.5 µm, Fatty acid metal salt F 0.5 | 2.0µm, PTFE 0.05 | 0.15µm, PMMA 0.5 |
| 112 | 3.5 µm, Fatty acid metal salt A 0.5 | 4.0µm, PTFE 0.05 | 0.1µm, PVDF 0.05 |
| 113 | 3.5 µm, Fatty acid metal salt G 0.5 | 4.0 µm, PTFE 0.05 | 0.1µm, PVDF 0.05 |
| 114 | 0.5 µm*,* Fatty acid metal salt C 0.5 | 4.0µm, PTFE 2.0 | 0.1 µm, PVDF 0.05 |
| 115 | 3.5 µm, Fatty acid metal salt B 0.5 | 0.15µm, PMMA 0.5 | 0.1µm, PVDF 0.5 |
| 116 | 3.5 µm, Fatty acid metal salt C 0.5 | 0.15µm, PMMA 1.5 | 0.1µm, PVDF 1.5 |
| 117 | 3.5 µm, Fatty acid metal salt D 0.5 | 0.4µm, PMMA 0.5 | 0.4µm, PVDF 0.5 |
| 118 | 3.5 µm, Fatty acid metal salt E 0.5 | 0.4µm, PMMA 1.5 | 0.4µm, PVDF 1.5 |
| 119 | 3.5 µm, Fatty acid metal salt F 0.5 | 2.0µm, PMMA 0.5 | 2.0µm, PMMA 0.5 |
| 120 | 3.5 µm, Fatty acid metal salt G 0.5 | 2.0µm, PMMA 1.5 | 2.0µm, PMMA 1.5 |

**TABLE 3g**

| Comparative Example | Fatty acid metal salt (particle size, type, amount) | First organic particle (particle size, type, amount) | Second organic particle (particle size, type, amount) |
|---|---|---|---|
| 121 | 3.5 µm, Fatty acid metal salt B 0.5 | 0.15µm, PMMA 0.5 | 0.1µm, PVDF 0.5 |
| 122 | 3.5 µm, Fatty acid metal salt C 0.5 | 0.15µm, PMMA 0.5 | 0.1µm, PVDF 0.5 |
| 123 | 3.5 µm, Fatty acid metal salt D 0.5 | 0.15µm, PMMA 0.5 | 0.15µm, PVDF 0.5 |
| 124 | 3.5 µm, Fatty acid metal salt E 0.5 | 0.4µm, PMMA 0.5 | 0.3µm, PVDF 0.5 |
| 125 | 3.5 µm, Fatty acid metal salt F 0.5 | 0.4µm, PMMA 0.5 | 0.4µm, PVDF 0.5 |
| 126 | 3.5 µm, Fatty acid metal salt G 0.5 | 0.4µm, PMMA 0.5 | 0.4µm, PVDF 0.5 |
| 127 | 3.5 µm, Fatty acid metal salt B 0.5 | 0.15µm, PMMA 0.5 | 0.1µm, PVDF 0.5 |
| 128 | 3.5 µm, Fatty acid metal salt C 0.5 | 4.0µm, PTFE 0.5 | 4.0µm, PMMA 0.5 |
| 129 | 3.5 µm, Fatty acid metal salt D 0.5 | 4.0µm, PTFE 1.5 | 4.0µm, PMMA 1.5 |
| 130 | 3.5 µm, Fatty acid metal salt E 0.5 | 0.4µm, PVDF 1.0 | 0.14µm, PVDF 0.05 |
| 131 | 3.5 µm, Fatty acid metal salt F 0.5 | 0.4µm, PVDF 1.0 | 0.1µm, PVDF 2.0 |
| 132 | 3.5 µm, Fatty acid metal salt G 0.5 | 0.4µm, PMMA 1.0 | 0.1µm, PVDF 0.05 |
| 133 | 3.5 µm, Fatty acid metal salt A 0.5 | 0.4µm, PMMA 1.0 | 0.1µm, PVDF 2.0 |
| 134 | 3.5 µm, Fatty acid metal salt B 0.5 | 2.0µm, PTFE 1.0 | 0.1µm, PVDF 0.05 |
| 135 | 3.5 µm, Fatty acid metal salt C 0.5 | 0.15 µm, PMMA 0.5 | 0.1 µm, PVDF 0.5 |
| 136 | 3.5 µm, Fatty acid metal salt D 0.5 | 0.15µm, PMMA 0.5 | 0.1µm, PVDF 0.5 |
| 137 | 3.5 µm, Fatty acid metal salt E 0.5 | 0.15µm, PMMA 0.5 | 0.1µm, PVDF 0.5 |
| 138 | 3.5 µm, Fatty acid metal salt F 0.5 | 4.0µm, PTFE 0.5 | 4.0µm, PMMA 0.5 |
| 139 | 3.5 µm, Fatty acid metal salt G 0.5 | 4.0µm, PTFE 0.5 | 4.0µm, PMMA 0.5 |
| 140 | 3.5 µm, Fatty acid metal salt F 2.5 | 4.0µm, PTFE 0.5 | 4.0µm, PMMA 0.5 |

**TABLE 3h**

| Comparative Example | Fatty acid metal salt (particle size, type, amount) | First organic particle (particle size, type, amount) | Second organic particle (particle size, type, amount) |
|---|---|---|---|
| 141 | 3.5 µm, Fatty acid metal salt G 2.5 | 4.0µm, PTFE 0.5 | 4.0µm, PMMA 0.5 |
| 142 | 3.5 µm, Fatty acid metal salt A 0.5 | 2.0µm, PMMA 1.0 | 0.1µm, PVDF 2.0 |
| 143 | 3.5 µm, Fatty acid metal salt B 2.5 | 4.0µm, PMMA 1.0 | 0.1µm, PVDF 0.5 |
| 144 | 3.5 µm, Fatty acid metal salt C 2.5 | 4.0µm, PTFE 1.0 | 0.1µm, PVDF 0.5 |
| 145 | 3.5 µm, Fatty acid metal salt D 2.5 | 0.4µm, PVDF 1.0 | 0.15µm, PMMA 0.05 |
| 146 | 3.5 µm, Fatty acid metal salt E 2.5 | 0.4µm, PVDF 1.0 | 0.15µm, PMMA 2.0 |
| 147 | 3.5 µm, Fatty acid metal salt F 2.5 | 0.4µm, PMMA 1.0 | 0.15µm, PMMA 0.05 |
| 148 | 3.5 µm, Fatty acid metal salt G 2.5 | 0.4µm, PMMA 1.0 | 0.15µm, PMMA 2.0 |
| 149 | 3.5 µm, Fatty acid metal salt A 2.5 | 2.0µm, PTFE 1.0 | 0.15µm, PMMA 0.05 |
| 150 | 3.5 µm, Fatty acid metal salt B 2.5 | 2.0µm, PMMA 1.0 | 0.15µm, PMMA 2.0 |
| 151 | 3.5 µm, Fatty acid metal salt C 2.5 | 4.0µm, PMMA 1.0 | 0.15µm, PMMA 0.5 |
| 152 | 3.5 µm, Fatty acid metal salt D 2.5 | 4.0µm, PTFE 1.0 | 0.15µm, PMMA 0.5 |
| 153 | 0.03µm, Fatty acid metal salt E 0.2 | 0.1µm, PVDF 0.5 | 0.15µm, PMMA 0.5 |
| 154 | 0.03µm, Fatty acid metal salt F 0.2 | 0.1µm, PVDF 1.5 | 0.15µm, PMMA 1.5 |
| 155 | 0.03µm, Fatty acid metal salt G 0.2 | 0.4µm, PVDF 0.5 | 0.2µm, PMMA 0.5 |
| 156 | 0.03µm, Fatty acid metal salt A 0.2 | 0.4µm, PVDF 1.5 | 0.4µm, PMMA 1.5 |
| 157 | 0.03µm, Fatty acid metal salt B 0.2 | 2.0µm, PMMA 0.5 | 2.0µm, PMMA 0.5 |
| 158 | 0.03µm, Fatty acid metal salt C 0.2 | 2.0µm, PMMA 1.5 | 2.0µm, PMMA 1.5 |
| 159 | 0.03µm, Fatty acid metal salt D 0.2 | 4.0µm, PMMA 0.5 | 4.0µm, PTFE 0.5 |
| 160 | 0.03µm, Fatty acid metal salt E 0.2 | 4.0µm, PMMA 1.5 | 4.0µm, PTFE 1.5 |

**TABLE 3i**

| Comparative Example | Fatty acid metal salt (particle size, type, amount) | First organic particle (particle size, type, amount) | Second organic particle (particle size, type, amount) |
|---|---|---|---|
| 161 | 0.03µm, Fatty acid metal salt F 0.2 | 0.1µm, PVDF 0.05 | 0.2µm, PVDF 1.0 |
| 162 | 0.03µm, Fatty acid metal salt G 0.2 | 0.1µm, PVDF 2.0 | 0.3µm, PVDF 1.0 |
| 163 | 0.03µm, Fatty acid metal salt A 0.2 | 0.1µm, PVDF 0.05 | 0.2µm,PMMA 1.0 |
| 164 | 0.03µm, Fatty acid metal salt B 0.2 | 0.1µm, PVDF 2.0 | 0.3µm, PMMA 1.0 |
| 165 | 0.03µm, Fatty acid metal salt C 0.2 | 0.1µm, PVDF 0.05 | 2.0µm, PTFE 1.0 |
| 166 | 0.03µm, Fatty acid metal salt D 0.2 | 0.1µm, PVDF 2.0 | 2.0µm, PMMA 1.0 |
| 167 | 0.03µm, Fatty acid metal salt E 0.2 | 0.1µm, PVDF 0.5 | 4.0µm, PMMA 1.0 |
| 168 | 0.03µm, Fatty acid metal salt F 0.2 | 0.1µm, PVDF 0.5 | 4.0µm, PTFE 1.0 |
| 169 | 0.03µm, Fatty acid metal salt G 0.2 | 0.15µm, PMMA 0.05 | 0.4µm, PVDF 1.0 |
| 170 | 0.03µm, Fatty acid metal salt A 0.2 | 0.15µm, PMMA 2.0 | 0.4µm,PVDF 1.0 |
| 171 | 0.03µm, Fatty acid metal salt B 0.2 | 0.15µm, PMMA 0.05 | 0.4µm,PMMA 1.0 |
| 172 | 0.03µm, Fatty acid metal salt C 0.2 | 0.15µm, PMMA 2.0 | 0.2µm,PMMA 1.0 |
| 173 | 0.03µm, Fatty acid metal salt D 0.2 | 0.1µm, PVDF 0.5 | 0.15µm, PMMA 0.5 |
| 174 | 0.03µm, Fatty acid metal salt E 0.2 | 0.1µm, PVDF 1.5 | 0.15µm, PMMA 1.5 |
| 175 | 0.03µm, Fatty acid metal salt F 0.2 | 0.4µm, PVDF 0.5 | 0.3µm, PMMA 0.5 |
| 176 | 0,03µm, Fatty acid metal salt G 0.2 | 0.4µm, PVDF 1.5 | 0.4µm, PMMA 1.5 |
| 177 | 0.03µm, Fatty acid metal salt A 0.2 | 2.0µm, PMMA 0.5 | 2.0µm, PMMA 0.5 |
| 178 | 0.03µm, Fatty acid metal salt B 0.2 | 2.0µm, PMMA 1.5 | 2.0µm, PMMA 1.5 |
| 179 | 0.03µm, Fatty acid metal salt C 0.2 | 4.0µm, PMMA 0.5 | 4.0µm, PTFE 0.5 |
| 180 | 0.03µm, Fatty acid metal salt D 0.2 | 4.0µm, PMMA 1.5 | 4.0µm, PTFE 1.5 |

**TABLE 3j**

| Comparative Example | Fatty acid metal salt (particle size, type, amount) | First organic particle (particle size, type, amount) | Second organic particle (particle size, type, amount) |
|---|---|---|---|
| 181 | 0.03µm, Fatty acid metal salt E 0.2 | 0.1µm, PVDF 0.05 | 0.4µm, PVDF 1.0 |
| 182 | 0.03µm, Fatty acid metal salt F 0.2 | 0.1µm, PVDF 2.0 | 0.4µm, PVDF 1.0 |
| 183 | 0.03µm, Fatty acid metal salt G 0.2 | 0.1µm, PVDF 0.05 | 0.4µm, PMMA 1.0 |
| 184 | 0.03µm, Fatty acid metal salt A 0.2 | 0.1 µm, PVDF 2.0 | 0.4µm, PMMA 1.0 |
| 185 | 0.03µm, Fatty acid metal salt B 0.2 | 0.1µm, PVDF 0.05 | 2.0µm, PTFE 1.0 |
| 186 | 0.03µm, Fatty acid metal salt C 0.2 | 0.1µm, PVDF 2.0 | 2.0µm, PMMA 1.0 |
| 187 | 0.03µm, Fatty acid metal salt D 0.2 | 0.1µm, PVDF 0.5 | 4.0µm, PMMA 1.0 |
| 188 | 0.03µm, Fatty acid metal salt E 0.2 | 0.1µm, PVDF 0.5 | 4.0µm, PTFE 1.0 |
| 189 | 0.03µm, Fatty acid metal salt F 0.05 | 0.15µm, PMMA 0.05 | 0.5µm, PVDF 1.0 |
| 190 | 0.03µm, Fatty acid metal salt G 0.05 | 0.15µm, PMMA 2.0 | 0.5µm, PVDF 1.0 |
| 191 | 0.03µm, Fatty acid metal salt A 0.05 | 0.15µm, PMMA 0.05 | 0.5µm,PMMA 1.0 |
| 192 | 0.03µm, Fatty acid metal salt B 0.05 | 0.15µm, PMMA 2.0 | 0.4µm, PMMA 1.0 |
| 193 | 0.03µm, Fatty acid metal salt C 0.05 | 0.15µm, PMMA 0.05 | 2.0µm, PTFE 1.0 |

### TEST EXAMPE 1

5,000 sheets of paper was printed with each of the non-magnetic mono-component color toner prepared in Examples 1-121 and Comparative Examples 1-193 using a contact type of non-magnetic mono-component development printer (HP 4600, Hewlett-Packard) at room temperature and humidity (20 □, 55% RH). Image density, printing efficiency, and long-term stability were tested according to the following methods. The results are given in Tables 4 and 5 below.

### 1) Charging element contamination

PCR contamination, and melting and contamination of sleeve surface were observed according to the following criteria.

| | PCR contamination | Melting and contamination of the sleeve surface |
|---|---|---|
| A | Little | Little |
| B | Some | Some |
| C | high | high |
| D | Very high | Very high |

### 2) Image density(I.D)

Solid area was measured using a Macbeth reflectance densitometer RD918.
A: the image density is equal to or more than 1.4
B: the image density is equal to or more than 1.3
C: the image density is equal to or less than 1.2
D: the image density is equal to or less than 1.0

### 3) Transfer efficiency

Of the 5,000 sheets of paper, printing efficiency was calculated by counting the number of wasted sheets per each 500 sheets.
A: The transfer efficiency is equal to or more than 80 %
B: The transfer efficiency is 70□80 %
C: The transfer efficiency is 60070 %
D: The transfer efficiency is 50□60 %

### 4) long-term stability

Whether I.D. and printing efficiency were maintained after printing 5,000 sheets was observed.
A: I.D ≥ 1.4, and Transfer efficiency ≥ 75 %;
B: I.D ≥ 1.3, and Transfer efficiency ≥ 70 %;
C: I.D ≤ 1.2, and Transfer efficiency ≥ 60 %;
D: I.D ≤ 1.0, and Transfer efficiency ≥ 40 %;

**TABLE 4A**

| | Charging element contamination | Image density | Transfer efficiency | Long-term stability |
|---|---|---|---|---|
| EXAMPLE 1 | A | B | A | A |
| EXAMPLE 2 | A | B | A | A |
| EXAMPLE 3 | A | A | A | A |
| EXAMPLE 4 | A | A | A | A |
| EXAMPLE 5 | A | A | B | A |
| EXAMPLE 6 | A | A | B | A |
| EXAMPLE 7 | A | A | A | A |
| EXAMPLE 8 | A | B | A | A |
| EXAMPLE 9 | A | A | A | A |
| EXAMPLE10 | A | A | A | A |
| EXAMPLE 11 | A | B | A | A |
| EXAMPLE 12 | A | A | A | B |
| EXAMPLE 13 | A | A | A | A |
| EXAMPLE 14 | A | A | A | A |
| EXAMPLE 15 | B | A | B | A |
| EXAMPLE 16 | A | A | A | A |
| EXAMPLE 17 | A | A | A | A |
| EXAMPLE 18 | A | B | A | A |
| EXAMPLE 19 | A | A | A | B |
| EXAMPLE 20 | A | A | A | A |
| EXAMPLE 21 | B | A | A | A |
| EXAMPLE 22 | A | A | A | A |
| EXAMPLE 23 | A | A | A | B |
| EXAMPLE 24 | A | A | A | A |
| EXAMPLE 25 | B | A | A | A |
| EXAMPLE 26 | A | A | A | A |
| EXAMPLE 27 | A | B | A | A |
| EXAMPLE 28 | A | A | A | A |
| EXAMPLE 29 | A | A | A | A |
| EXAMPLE 30 | A | B | A | A |
| EXAMPLE 31 | A | A | A | A |
| EXAMPLE 32 | A | B | A | A |
| EXAMPLE 33 | A | A | A | A |
| EXAMPLE 34 | A | A | A | A |
| EXAMPLE 35 | A | B | A | A |
| EXAMPLE 36 | A | A | A | A |
| EXAMPLE 37 | A | A | A | A |
| EXAMPLE 38 | A | A | A | A |
| EXAMPLE 39 | A | A | A | A |
| EXAMPLE 40 | B | A | A | A |

**TABLE 4B**

| | Charging element contamination | Image density | Transfer efficiency | Long-term stability |
|---|---|---|---|---|
| EXAMPLE 41 | A | A | A | A |
| EXAMPLE 42 | A | A | A | A |
| EXAMPLE 43 | A | A | A | A |
| EXAMPLE 44 | A | A | A | A |
| EXAMPLE 45 | B | A | A | A |
| EXAMPLE 46 | A | A | A | A |
| EXAMPLE 47 | A | A | A | A |
| EXAMPLE 48 | B | A | A | A |
| EXAMPLE 49 | A | A | B | A |
| EXAMPLE 50 | A | A | A | A |
| EXAMPLE 51 | A | A | A | A |
| EXAMPLE 52 | B | A | A | A |
| EXAMPLE 53 | A | A | A | A |
| EXAMPLE 54 | A | A | A | A |
| EXAMPLE 55 | B | A | A | B |
| EXAMPLE 56 | A | A | A | A |
| EXAMPLE 57 | A | A | A | A |
| EXAMPLE 58 | A | A | A | A |
| EXAMPLE 59 | A | A | B | A |
| EXAMPLE 60 | A | A | A | A |
| EXAMPLE 61 | A | A | A | A |
| EXAMPLE 62 | A | A | A | A |
| EXAMPLE 63 | A | A | A | A |
| EXAMPLE 64 | A | A | A | A |
| EXAMPLE 65 | A | A | A | A |
| EXAMPLE 66 | B | A | A | A |
| EXAMPLE 67 | A | A | A | A |
| EXAMPLE 68 | A | A | B | A |
| EXAMPLE 69 | A | A | A | A |
| EXAMPLE 70 | A | B | A | A |
| EXAMPLE 71 | A | A | A | A |
| EXAMPLE 72 | A | A | B | A |
| EXAMPLE 73 | A | A | A | A |
| EXAMPLE 74 | A | A | A | A |
| EXAMPLE 75 | A | B | A | A |
| EXAMPLE 76 | A | B | B | A |
| EXAMPLE 77 | B | A | A | A |
| EXAMPLE 78 | A | A | A | A |
| EXAMPLE 79 | A | A | A | A |
| EXAMPLE 80 | A | A | A | A |

**TABLE 4C**

| | Charging element contamination | Image density | Transfer efficiency | Long-term stability |
|---|---|---|---|---|
| EXAMPLE 81 | A | B | A | A |
| EXAMPLE 82 | A | A | B | A |
| EXAMPLE 83 | A | A | A | B |
| EXAMPLE 84 | B | A | A | A |
| EXAMPLE 85 | A | A | A | B |
| EXAMPLE 86 | A | A | A | A |
| EXAMPLE 87 | A | B | A | A |
| EXAMPLE 88 | A | A | B | A |
| EXAMPLE 89 | A | B | B | A |
| EXAMPLE 90 | B | A | A | A |
| EXAMPLE 91 | B | B | A | A |
| EXAMPLE 92 | A | A | A | A |
| EXAMPLE 93 | B | A | A | B |
| EXAMPLE 94 | A | A | A | B |
| EXAMPLE 95 | A | B | A | A |
| EXAMPLE 96 | A | A | B | A |
| EXAMPLE 97 | A | A | A | B |
| EXAMPLE 98 | A | A | A | B |
| EXAMPLE 99 | A | A | A | A |
| EXAMPLE 100 | A | A | A | A |
| EXAMPLE 101 | A | A | B | A |
| EXAMPLE 102 | A | A | B | A |
| EXAMPLE 103 | A | B | A | A |
| EXAMPLE 104 | A | B | A | A |
| EXAMPLE 105 | A | A | A | A |
| EXAMPLE 106 | A | A | A | A |
| EXAMPLE 107 | A | A | A | A |
| EXAMPLE 108 | A | A | A | A |
| EXAMPLE 109 | A | A | A | A |
| EXAMPLE 110 | A | A | A | A |
| EXAMPLE 111 | A | A | A | A |
| EXAMPLE 112 | A | A | A | A |
| EXAMPLE 113 | A | A | A | B |
| EXAMPLE 114 | A | A | A | B |
| EXAMPLE 115 | A | A | A | B |
| EXAMPLE 116 | A | A | A | A |
| EXAMPLE 117 | A | A | B | A |
| EXAMPLE 118 | A | A | B | A |
| EXAMPLE 119 | A | B | B | A |
| EXAMPLE 120 | A | B | A | A |
| EXAMPLE 121 | B | A | B | B |

**TABLE 5A**

| Comparative Example | Charging elements contamination | Image density | Transfer efficiency | Long-term stability |
|---|---|---|---|---|
| 1 | D | D | D | D |
| 2 | D | D | D | D |
| 3 | D | D | C | D |
| 4 | D | D | D | D |
| 5 | D | C | D | D |
| 6 | D | D | D | D |
| 7 | D | D | D | D |
| 10 | D | C | D | D |
| 11 | D | D | D | C |
| 12 | D | C | D | D |
| 13 | D | C | D | D |
| 14 | D | D | D | D |
| 15 | D | D | D | C |
| 16 | D | D | D | D |
| 17 | D | C | D | D |
| 18 | D | D | D | D |
| 19 | D | D | D | D |
| 20 | D | D | D | D |
| 21 | D | D | D | D |
| 22 | D | D | D | D |
| 23 | D | D | D | D |
| 24 | D | D | D | D |
| 25 | D | D | C | D |
| 26 | D | D | D | D |
| 27 | D | D | D | D |
| 28 | D | D | D | D |
| 29 | D | D | D | D |
| 30 | D | D | D | D |
| 31 | D | D | C | D |
| 32 | D | D | C | D |
| 33 | D | D | D | D |
| 34 | D | D | D | D |
| 35 | D | D | D | D |
| 36 | D | D | D | D |
| 37 | D | D | D | D |
| 38 | D | D | D | D |
| 39 | D | D | D | D |
| 40 | C | C | D | D |

**TABLE 5B**

| Comparative Example | Charging elements contamination | Image density | Transfer efficiency | Long-term stability |
|---|---|---|---|---|
| 41 | D | D | D | D |
| 42 | D | D | C | D |
| 43 | D | D | C | D |
| 44 | D | D | D | D |
| 45 | C | D | D | D |
| 46 | D | C | D | D |
| 47 | D | D | D | D |
| 48 | D | D | C | D |
| 49 | D | D | D | C |
| 50 | D | D | D | D |
| 51 | D | C | D | D |
| 52 | D | D | D | C |
| 53 | D | D | D | D |
| 54 | D | C | C | D |
| 55 | D | D | D | D |
| 56 | D | D | D | D |
| 57 | D | D | C | D |
| 58 | D | D | D | D |
| 59 | C | C | D | D |
| 60 | D | D | D | C |
| 61 | D | D | D | C |
| 62 | D | C | C | D |
| 63 | D | D | D | C |
| 64 | D | D | D | D |
| 65 | D | D | D | D |
| 66 | D | D | D | C |
| 67 | D | D | D | D |
| 68 | D | D | D | D |
| 69 | D | D | D | D |
| 70 | D | D | D | C |
| 71 | D | D | D | C |
| 72 | C | D | D | D |
| 73 | D | D | D | D |
| 74 | C | D | D | D |
| 75 | D | D | D | D |
| 76 | D | D | C | D |
| 77 | D | D | C | D |
| 78 | D | D | D | D |
| 79 | D | C | D | D |
| 80 | C | D | D | D |

**TABLE 5C**

| Comparative Example | Charging elements contamination | Image density | Transfer efficiency | Long-term stability |
|---|---|---|---|---|
| 81 | D | C | D | D |
| 82 | D | D | D | D |
| 83 | D | D | C | D |
| 84 | D | D | D | D |
| 85 | D | C | D | D |
| 86 | D | D | D | C |
| 87 | D | D | D | D |
| 88 | C | D | D | D |
| 89 | D | D | D | D |
| 90 | D | D | C | D |
| 91 | C | D | D | D |
| 92 | D | D | D | D |
| 93 | C | D | D | D |
| 94 | D | D | C | D |
| 95 | D | D | D | D |
| 96 | D | D | D | C |
| 97 | D | D | D | D |
| 98 | D | D | D | D |
| 99 | D | D | D | D |
| 100 | C | D | D | D |
| 101 | D | D | D | D |
| 102 | D | D | C | D |
| 103 | D | D | D | C |
| 104 | D | D | C | D |
| 105 | D | C | D | D |
| 106 | D | D | D | D |
| 107 | D | C | D | D |
| 108 | D | D | D | D |
| 109 | D | D | D | D |
| 110 | C | D | D | D |
| 111 | D | D | D | D |
| 112 | D | D | C | D |
| 113 | D | D | D | D |
| 114 | D | C | D | D |
| 115 | D | D | D | D |
| 116 | C | D | D | D |
| 117 | D | C | D | D |
| 118 | D | D | D | D |
| 119 | D | D | C | D |
| 120 | D | C | D | D |

**TABLE 5D**

| Comparative Example | Charging elements contamination | Image density | Transfer efficiency | Long-term stability |
|---|---|---|---|---|
| 121 | D | D | D | D |
| 122 | D | C | D | D |
| 123 | D | D | D | C |
| 124 | D | D | D | D |
| 125 | D | D | D | C |
| 126 | D | D | D | D |
| 127 | D | D | D | C |
| 128 | D | D | C | D |
| 129 | D | C | D | D |
| 130 | D | D | D | D |
| 131 | C | D | D | D |
| 132 | D | D | D | D |
| 133 | D | D | D | D |
| 134 | D | C | C | C |
| 135 | D | D | D | D |
| 136 | D | D | C | D |
| 137 | D | C | D | D |
| 138 | C | D | D | D |
| 139 | D | D | D | D |
| 140 | C | B | D | D |
| 141 | C | D | D | D |
| 142 | C | D | D | D |
| 143 | D | D | D | D |
| 144 | D | C | D | D |
| 145 | D | C | D | D |
| 146 | D | D | C | D |
| 147 | D | D | C | D |
| 148 | D | D | C | D |
| 149 | D | D | C | D |
| 150 | D | D | D | C |
| 151 | D | D | D | C |
| 152 | D | D | B | C |
| 153 | D | D | D | C |
| 154 | D | D | D | D |
| 155 | C | D | D | D |
| 156 | C | D | D | D |
| 157 | C | D | D | D |
| 158 | C | D | D | D |
| 159 | C | D | D | D |
| 160 | D | D | D | D |

**TABLE 5E**

| Comparative Example | Charging elements contamination | Image density | Transfer efficiency | Long-term stability |
|---|---|---|---|---|
| 161 | D | D | C | D |
| 162 | D | D | C | D |
| 163 | D | D | D | D |
| 164 | C | D | D | D |
| 165 | D | D | C | D |
| 166 | D | D | D | D |
| 167 | D | D | D | C |
| 168 | D | D | C | D |
| 169 | D | C | D | D |
| 170 | D | D | D | D |
| 171 | C | D | D | D |
| 172 | D | D | D | D |
| 173 | D | D | C | D |
| 174 | D | D | D | D |
| 175 | D | D | D | D |
| 176 | D | D | D | D |
| 177 | C | D | D | D |
| 178 | D | C | D | D |
| 179 | D | D | D | D |
| 180 | D | C | D | D |
| 181 | D | C | D | D |
| 182 | D | D | D | C |
| 183 | D | D | D | D |
| 184 | D | C | C | D |
| 185 | D | D | D | D |
| 186 | D | D | D | D |
| 187 | D | D | D | D |
| 188 | D | D | D | D |
| 189 | C | D | D | D |
| 190 | C | D | D | D |
| 191 | D | D | D | D |
| 192 | C | D | D | D |
| 193 | D | D | D | D |

As shown in Tables 4 and 5, the color toner of EXAMPLES 1 to 121 prepared by coating a composition comprising a fatty acid metal salt having average particle size of 0.05 to 3.0 µm, the first organic particle having average particle size of 0.3 to 2.0 µm, the second spherical organic particle having average particle size of 0.05 to 0.25 µm, and silica had an advantage in terms of contamination of charging element, image density, transfer efficiency and long term stability compared to the color toner of Comparative Examples 1-193. It is confirmed that fatty acid metal salt provides a reduction in contamination of the surface of OPC and PCR by improving the cleaning property of the OPC drum, and that the organic particle having different average particle size is coated on the toner mother particle to reduce the adhesion of the toner mother particle, leading to sphere-like behavior of the toner particle.

As described above, the non-magnetic mono-component color toner of the present invention is advantageous in terms of contamination of the charging elements, narrow charge distribution, high chargeability, superior image quality and transfer efficiency, long-term stability, and thus long-term reliability.

## Claims

1. A non-magnetic mono-component color toner comprising a toner mother particle, and a coating layer formed on the toner mother particle, wherein the coating layer comprises a fatty acid metal salt having average particle size of 0.05 to 3.0 µm in the amount of 0.1 to 2.0 parts by weight,
a first organic particle having average particle size of 0.3 to 2.0 µm in the amount of 0.1 to 1.5 parts by weight,
a second organic particle having average particle size of 0.05 to 0.25 µm in the amount of 0.1 to 1.5 parts by weight, and
silica having average particle size of 0.006 to 0.04 µm in the amount of 1.0 to 4.0 parts by weight,
wherein the amounts are given with respect to the 100 parts by weight of the toner mother particle.

2. The non-magnetic mono-component color toner according to Claim 1, wherein the color toner has average particle size of 3.0 µm to 20 µm, and aspect ratio of short radius against long radius of 0.3 to 0.8

3. The non-magnetic mono-component color toner according to Claim 1, wherein the thickness of the coating layer is 30 nm to 2.0 µm.

4. The non-magnetic mono-component color toner according to Claim 1, wherein the fatty acid metal salt has average particle size of 0.5 to 1.5 µm.

5. The non-magnetic mono-component color toner according to Claim 1, wherein the fatty acid metal salt is a salt prepared by a fatty acid with 4 to 20 carbon atoms, and a metal selected from the group consisting of Na, K, Al, Ca, Zn, Mg, Co, Fe, Mn, Ba, Vd and Sn.

6. The non-magnetic mono-component color toner according to Claim 5, wherein the fatty acid is at least one selected from the group consisting of caproic acid, caprylic acid, capric acid, lauric acid, myristic acid, palmitic acid, palmitoleic acid, stearic acid, oleic acid, linoleic acid, linolenic acid, arachidic acid, arachidonic acid, behenic acid, montenic acid, iso-stearic acid, and epoxy stearic acid.

7. The non-magnetic mono-component color toner according to Claim 5, wherein the fatty acid metal salt includes metal in the amount of 2.0 to 10 wt%.

8. The non-magnetic mono-component color toner according to Claim 1, wherein the first organic particle has average particle size of 0.4 to 2.0 µm.

9. The non-magnetic mono-component color toner according to Claim 1, wherein the second organic particle has average particle size of 0.1 to 0.15 µm.

10. The non-magnetic mono-component color toner according to Claim 1, wherein the first organic particle and the second organic particle are the same material or of different materials.

11. The non-magnetic mono-component color toner according to Claim 1, wherein the first organic particle and the second organic particle are
(a) a homopolymer or a copolymer prepared by one or more monomer selected from the group consisting of: styrenes such as styrene, methyl styrene, dimethyl styrene, ethyl styrene, phenyl styrene, chloro styrene, hexyl styrene, octyl styrene, and nonyl styrene; vinylhalides such as vinylchloride and vinylfluoride; vinylesters such as vinylacetate and vinylbenzoate; methacrylates such as methylmethacrylate, ethyl methacrylate, propyl methacrylate, n-butyl methacrylate, iso-butyl methacrylate, 2-ethylhexyl methacrylate, and phenyl methacrylate; acrylic acid derivatives such as acrylonitrile, and methacrylonitrile; acrylates such as methylacrylate, ethylacrylate, butylacrylate, and phenylacrylate; tetrafluoroethylene; and 1,1-difluoroethylene; or
(b) a mixture of a polymer selected from the group consisting of the homopolymer and the copolymer, and a resin selected from the group consisting of stryrene-based resin, epoxy-based resin, polyester-based resin, and polyurethane-based resin.

12. The non-magnetic mono-component color toner according to Claim 1, wherein the silica has average particle size of 0.01 to 0.02 µm.

13. The non-magnetic mono-component color toner according to Claim 1, wherein the silica is plain silica, or modified silica which is prepared by treatment of the surface with a modifying agent selected from the group consisting of dimethyldichlorosilane, dimethylpolysiloxane, hexamethyldisilazane, aminosilane, alkylsilane of C1 to C20, and octamethylcyclotetrasiloxane.

14. The non-magnetic mono-component color toner according to Claim 1, wherein the toner mother particle further comprises a binder resin and colorant.

15. The non-magnetic mono-component color toner according to Claim 14, wherein the binder resin is at least one selected from the group consisting of polystyrene-based resin, polyester-based resin, polyethylene resin, polypropylene resin, styrene-alkylacrylate copolymer of C1 to C18, styrene-alkylmethacrylate copolymer, styrene-acrylronitrile copolymer, stryrene-butadiene copolymer, and styrene-malerate copolymer.

16. The non-magnetic mono-component color toner according to Claim 14, wherein the colorant is one selected from the group consisting of cyan, magenta, yellow and black pigments and dyes.

17. A method of preparation of non-magnetic mono-component color toner comprising the steps of:
putting 100 parts by weight of a toner mother particle into a mixer, and
mixing by addition 0.1 to 2.0 parts by weight of a fatty acid metal salt having average particle size of 0.05 to 3.0 µm, 0.1 to 1.5 parts by weight of a first organic particle having average particle size of 0.3 to 2.0 µm, 0.1 to 1.5 parts by weight of a second organic particle having average particle size of 0.05 to 0.25 µm, and 1.0 to 4.0 parts by weight of silica having average particle size of 0.006 to 0.04 µm to form the coating layer on the toner mother particle.

18. The method of preparation of non-magnetic mono-component color toner according to Claim 17, wherein the mixer is selected from the group consisting of HENSCHEL mixer, a turbin type stirrer, a super mixer, and hybridizer.

19. The method of preparation of non-magnetic mono-component color toner according to Claim 17, wherein the mixing step is performed at tip speed of 10 to 30 m/sec.

## Patentansprüche

1. Nichtmagnetischer Monokomponentenfarbtoner, umfassend ein Tonermutterteilchen und eine Beschichtungsschicht, gebildet auf dem Tonermutterteilchen, worin die Beschichtungsschicht ein Fettsäuremetallsalz mit einer durchschnittlichen Teilchengröße von 0,05 bis 3,0 µm in der Menge von 0,1 bis 2,0 Gew.-Teilen umfasst, wobei ein erstes organisches Teilchen eine durchschnittliche Teilchengröße von 0,3 bis 2,0 µm in der Menge von 0,1 bis 1,5 Gew.-Teilen aufweist, ein zweites organisches Teilchen eine durchschnittliche Teilchengröße von 0,05 bis 0,25 µm in der Menge von 0,1 bis 1,5 Gew.-Teilen aufweist, und
Silika mit einer durchschnittlichen Teilchengröße von 0,006 bis 0,04 µm in der Menge von 1,0 bis 4,0 Gew.-Teilen hat, worin die Mengen in Bezug auf 100 Gew.-Teilen des Tonermutterteilchens angegeben sind.

2. Nichtmagnetischer Monokomponentenfarbtoner nach Anspruch 1, worin der Farbtoner eine durchschnittliche Teilchengröße von 3,0 bis 20 µm und ein Längenverhältnis des kurzen Radius gegenüber dem langen Radius von 0,3 bis 0,8 hat.

3. Nichtmagnetischer Monokomponentenfarbtoner nach Anspruch 1, worin die Dicke der Beschichtungsschicht 30 nm bis 2,0 µm ist.

4. Nichtmagnetischer Monokomponentenfarbtoner nach Anspruch 1, worin das Fettsäuremetallsalz eine durchschnittliche Teilchengröße von 0,5 bis 1,5 µm hat.

5. Nichtmagnetischer Monokomponentenfarbtoner nach Anspruch 1, worin das Fettsäuremetallsalz ein Salz ist, hergestellt durch eine Fettsäure mit 4 bis 20 Kohlenstoffatomen, und ein Metall, das ausgewählt ist aus der Gruppe, bestehend aus Na, K, Al, Ca, Zn, Mg, Co, Fe, Mn, Ba, Vd und Sn.

6. Nichtmagnetischer Monokomponentenfarbtoner nach Anspruch 5, worin die Fettsäure zumindest eine ist, ausgewählt aus der Gruppe bestehend aus Caproinsäure, Caprylsäure, Caprinsäure, Laurinsäure, Myristinsäure, Palmitinsäure, Palmitoleinsäure, Stearinsäure, Oleinsäure, Linolsäure, Linolensäure, Arachidinsäure, Arachidonsäure, Behensäure, Montensäure, Isostearinsäure und Epoxystearinsäure.

7. Nichtmagnetischer Monokomponentenfarbtoner nach Anspruch 5, worin das Fettsäuremetallsalz ein Metall in einer Menge von 2,0 bis 10 Gew.-% umfasst.

8. Nichtmagnetischer Monokomponentenfarbtoner nach Anspruch 1, worin das erste organische Teilchen eine durchschnittliche Teilchengröße von 0,4 bis 2,0 µm aufweist.

9. Nichtmagnetischer Monokomponentenfarbtoner nach Anspruch 1, worin das zweite organische Teilchen eine durchschnittliche Teilchengröße von 0,1 bis 0,15 µm hat.

10. Nichtmagnetischer Monokomponentenfarbtoner nach Anspruch 1, worin das erste organische Teilchen und das zweite organische Teilchen das gleiche Material oder verschiedene Materialien sind.

11. Nichtmagnetischer Monokomponentenfarbtoner nach Anspruch 1, worin das erste organische Teilchen und das zweite organische Teilchen sind:
(a) ein Homopolymer oder Copolymer, hergestellt durch ein oder mehrere Monomere, ausgewählt aus der Gruppe bestehend aus Styrolen, wie Styrol, Methylstyrol, Dimethylstyrol, Ethylstyrol, Phenylstyrol, Chlorstyrol, Hexylstyrol, Octylstyrol und Nonylstyrol; Vinylhalogeniden wie Vinylchlorid und Vinylfluorid; Vinylestern wie Vinylacetat und Vinylbenzoat, Methylacrylaten wie Methylmethacrylat, Ethylmethacrylat, Propylmethacrylat, n-Butylmethacrylat, Isobutylmethacrylat, 2-Ethylhexylmethacrylat und Phenylmethacrylat; Acrylsäurederivaten wie Acrylnitril und Methacrylnitril; Acrylaten wie Methylacrylat, Ethylacrylat, Butylacrylat und Phenylacrylat; Tetrafluroethylen und 1,1-Difluorethylen; oder
(b) eine Mischung aus einem Polymer, ausgewählt aus der Gruppe bestehend aus dem Homopolymer und Copolymer und einem Harz, ausgewählt aus der Gruppe bestehend aus Harz auf Styrolbasis, Harz auf Epoxybasis, Harz auf Polyesterbasis und Harz auf Polyurethanbasis.

12. Nichtmagnetischer Monokomponentenfarbtoner nach Anspruch 1, worin das Silika eine durchschnittliche Teilchengröße von 0,01 bis 0,02 µm hat.

13. Nichtmagnetischer Monokomponentenfarbtoner nach Anspruch 1, worin das Silika reines Silika oder modifiziertes Silika ist, hergestellt durch Behandlung der Oberfläche mit einem Modifizierungsmittel, ausgewählt aus der Gruppe bestehend aus Dimethyldichlorsilan, Dimethylpolysiloxan, Hexamethyldisilazan, Aminosilan, C₁- bis C₂₀-Alkylsilan und Octamethylcyclotetrasiloxan.

14. Nichtmagnetischer Monokomponentenfarbtoner nach Anspruch 1, worin das Tonermutterteilchen weiterhin ein Bindemittelharz und ein Färbemittel umfasst.

15. Nichtmagnetischer Monokomponentenfarbtoner nach Anspruch 14, worin das Bindemittelharz zumindest eines ist, ausgewählt aus der Gruppe bestehend aus Harz auf Polystyrolbasis, Harz auf Polyesterbasis, Polyethylenharz, Polypropylenharz, Styrol-Alkylacrylat-Copolymer mit C₁ bis C₁₈, Styrol-Alkylmethacrylat-Copolymer, Styrol-Acrylnitril-Copolymer, StyrolButadien-Copolymer und Styrol-Maleat-Copolymer.

16. Nichtmagnetischer Monokomponentenfarbtoner nach Anspruch 14, worin das Färbemittel eines ist, ausgewählt aus der Gruppe bestehend aus Cyan-, Magenta-, gelben und schwarzen Pigmenten und Farbstoffen.

17. Verfahren zur Herstellung eines nichtmagnetischen Monokomponentenfarbtoners umfassend folgende Schritte:
Geben von 100 Gew.-Teilen eines Tonermutterteilchens in einen Mischer, und
Mischen durch Zugabe von 0,1 bis 2,0 Gew.-Teilen eines Fettsäuremetallsalzes mit einer durchschnittlichen Teilchengröße von 0,05 bis 3,0 µm, 0,1 bis 1,5 Gew.-Teilen eines ersten organischen Teilchens mit einer durchschnittlichen Teilchengröße von 0,3 bis 2,0 µm, 0,1 bis 1,5 Gew.-Teilen eines zweiten organischen Teilchens mit einer durchschnittlichen Teilchengröße von 0,05 bis 0,25 µm und 1,0 bis 4,0 Gew.-Teilen Silika mit einer durchschnittlichen Teilchengröße von 0,006 bis 0,04 µm zur Bildung der Beschichtungsschicht auf dem Tonermutterteilchen.

18. Verfahren zur Herstellung eines nichtmagnetischen Monokomponentenfarbtoners nach Anspruch 17, worin der Mischer ausgewählt ist aus der Gruppe bestehend aus einem Henschel-Mischer, Turbinentypmischer, Supermischer und Hybridisierer.

19. Verfahren zur Herstellung des nichtmagnetischen Monokomponentenfarbtoners nach Anspruch 17, worin der Mischungsschritt bei einer Spitzengeschwindigkeit von 10 bis 30 m/s durchgeführt wird.

## Revendications

1. Encre en poudre colorée non magnétique à un seul composant comprenant une particule mère d'encre en poudre, et une couche de revêtement formée sur la particule mère d'encre en poudre, dans laquelle la couche de revêtement comprend un sel métallique d'acide gras ayant une taille de particule moyenne de 0,05 à 3,0 µm en une quantité de 0,1 à 2,0 parties en poids, une première particule organique ayant une taille de particule moyenne de 0,3 à 2,0 µm en une quantité de 0,1 à 1,5 parties en poids, une seconde particule organique ayant une taille de particule moyenne de 0,05 à 0,25 µm en une quantité de 0,1 à 1,5 parties en poids, et
de la silice ayant une taille de particule moyenne de 0,006 à 0,04 µm en une quantité de 1,0 à 4,0 parties en poids,
dans laquelle les quantités sont données par rapport au 100 parties en poids de la particule mère d'encre en poudre.

2. Encre en poudre colorée non magnétique à un seul composant selon la revendication 1, dans laquelle l'encre en poudre colorée a une taille de particule moyenne de 3,0 µm à 20 µm, et un rapport d'aspect de rayon court par rapport au rayon long de 0,3 à 0,8

3. Encre en poudre colorée non magnétique à un seul composant selon la revendication 1, dans laquelle l'épaisseur de la couche de revêtement est de 30 nm à 2,0 µm.

4. Encre en poudre colorée non magnétique à un seul composant selon la revendication 1, dans laquelle le sel métallique d'acide gras a une taille de particule moyenne de 0,5 à 1,5 µm.

5. Encre en poudre colorée non magnétique à un seul composant selon la revendication 1, dans laquelle le sel métallique d'acide gras est un sel préparé par un acide gras avec 4 à 20 atomes de carbone, et un métal sélectionné à partir du groupe constitué par Na, K, Al, Ca, Zn, Mg, Co, Fe, Mn, Ba, Vd et Sn.

6. Encre en poudre colorée non magnétique à un seul composant selon la revendication 5, dans lequel l'acide gras est au moins un sélectionné à partir du groupe constitué par l'acide caproïque, l'acide caprylique, l'acide caprique, l'acide laurique, l'acide myristique, l'acide palmitique, l'acide palmitoléique, l'acide stéarique, l'acide oléique, l'acide linoléique, l'acide linolénique, l'acide arachidique, l'acide arachidonique, l'acide béhénique, l'acide montanique, l'acide iso-stéarique, et l'acide stéarique époxyde.

7. Encre en poudre colorée non magnétique à un seul composant selon la revendication 5, dans laquelle le sel métallique d'acide gras inclut un métal en une quantité de 2,0 à 10% en poids.

8. Encre en poudre colorée non magnétique à un seul composant selon la revendication 1, dans laquelle la première particule organique a une taille de particule moyenne de 0,4 à 2,0 µm.

9. Encre en poudre colorée non magnétique à un seul composant selon la revendication 1, dans laquelle la seconde particule organique a une taille de particule moyenne de 0,1 à 0,15 µm.

10. Encre en poudre colorée non magnétique à un seul composant selon la revendication 1, dans laquelle la première particule organique et la seconde particule organique sont la même matière ou de matières différentes.

11. Encre en poudre colorée non magnétique à un seul composant selon la revendication 1, dans laquelle la première particule organique et la seconde particule organique sont
(a) un homopolymère ou un copolymère préparé par un ou plusieurs monomères sélectionnés à partir du groupe constitué par : des styrènes comme le styrène, le styrène méthylique, le styrène diméthylique, le styrène éthylique, le styrène phénylique, le chlorostyrène, l'hexylstyrène, l'octylstyrène et le nonylstyrène ; des halogénures de vinyle comme le chlorure de vinyle et le fluorure de vinyle ; des esters vinyliques comme l'acétate de vinyle et le benzoate de vinyle ; des méthacrylates comme le méthacrylate de méthyle, le méthacrylate d'éthyle, le méthacrylate de propyle, le méthacrylate de n-butyle, le méthacrylate d'isobutyle, le méthacrylate 2-éthylhexyle et le méthacrylate de phényle ; des dérivés d'acide acrylique comme l'acrylonitrile et le méthacrylonitrile ; des acrylates comme l'acrylate de méthyle, l'acrylate d'éthyle, l'acrylate de butyle et l'acrylate de phényle ; le tétrafluoroéthylène ; et le 1,1-difluoroéthylène ; ou
(b) un mélange d'un polymère sélectionné à partir du groupe constitué par l'homopolymère et le copolymère, et d'une résine sélectionnée à partir du groupe constitué par une résine à base de styrène, une résine à base d'époxyde, une résine à base de polyester et une résine à base de polyuréthane.

12. Encre en poudre colorée non magnétique à un seul composant selon la revendication 1, dans laquelle la silice a une taille en particule moyenne de 0,01 à 0,02 µm.

13. Encre en poudre colorée non magnétique à un seul composant selon la revendication 1, dans laquelle la silice est une silice ordinaire, ou une silice modifiée qui est préparée par traitement de la surface avec un agent de modification sélectionné à partir du groupe constitué par le diméthyldichlorosilane, le diméthylpolysiloxane, l'hexaméthyldisilazane, l'aminosilane, l'alkylsilane de C1 à C20 et l'octaméthylcyclotétrasiloxane.

14. Encre en poudre colorée non magnétique à un seul composant selon la revendication 1, dans laquelle la particule mère d'encre en poudre comprend en outre une résine de liant et un colorant.

15. Encre en poudre colorée non magnétique à un seul composant selon la revendication 14, dans laquelle la résine de liant est au moins une sélectionnée à partir du groupe constitué par une résine à base de polystyrène, une résine à base de polyester, une résine de polyéthylène, une résine de polypropylène, un copolymère de styrène-alkylacrylate de C1 à C18, un copolymère de styrène-méthacrylate d'alcoyle, un copolymère de styrène-acrylronitrile, un copolymère de stryrène-butadiène et un copolymère de styrène-maléate.

16. Encre en poudre colorée non magnétique à un seul composant selon la revendication 14, dans laquelle le colorant est un sélectionné à partir du groupe constitué par des pigments cyan, magenta, jaune et noir et des teintures.

17. Procédé de préparation d'encre en poudre colorée non magnétique à un seul composant comprenant les étapes consistant à :
mettre 100 parties en poids d'une particule mère d'encre en poudre dans un mélangeur, et
mélanger par ajout de 0,1 à 2,0 parties en poids un sel métallique d'acide gras ayant une taille de particule moyenne de 0,05 à 3,0 µm, 0,1 à 1,5 parties en poids d'une première particule organique ayant une taille de particule moyenne de 0,3 à 2,0 µm, 0,1 à 1,5 parties en poids d'une seconde particule organique ayant une taille de particule moyenne de 0,05 à 0,25 µm et 1,0 à 4,0 parties en poids de silice ayant une taille de particule moyenne de 0,006 à 0,04 µm pour former une couche de revêtement sur la particule mère d'encre en poudre.

18. Procédé de préparation d'encre en poudre colorée non magnétique à un seul composant selon la revendication 17, dans lequel le mélangeur est sélectionné à partir du groupe constitué par un mélangeur HENSCHEL, un agitateur de type à turbine, un super mélangeur et un dispositif d'hybridation.

19. Procédé de préparation d'encre en poudre colorée non magnétique à un seul composant selon la revendication 17, dans lequel l'étape de mélange est effectuée à une vitesse périphérique de 10 à 30 m/s.
